(19) Europäisches Patentamt / European Patent Office / Office européen des brevets

(11) **EP 4 478 803 A1**

(12) **EUROPEAN PATENT APPLICATION**
published in accordance with Art. 153(4) EPC

(43) Date of publication:
**18.12.2024 Bulletin 2024/51**

(21) Application number: **22925347.1**

(22) Date of filing: **10.02.2022**

(51) International Patent Classification (IPC):
*H04W 72/04* (2023.01)

(52) Cooperative Patent Classification (CPC):
**H04W 72/04**

(86) International application number:
**PCT/CN2022/075933**

(87) International publication number:
**WO 2023/150985 (17.08.2023 Gazette 2023/33)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **FUJITSU LIMITED**
**Kawasaki-shi, Kanagawa 211-8588 (JP)**

(72) Inventors:
• **JIANG, Qinyan**
  **Beijing 100022 (CN)**
• **ZHANG, Lei**
  **Beijing 100022 (CN)**

(74) Representative: **Haseltine Lake Kempner LLP**
**Cheapside House**
**138 Cheapside**
**London EC2V 6BJ (GB)**

(54) **INFORMATION FEEDBACK METHOD, AND INFORMATION RECEIVING METHOD AND APPARATUS**

(57) Embodiments of this disclosure provide an information reception method, information transmission method and information feedback method and apparatuses thereof. The information reception apparatus includes: a first receiving unit configured to receive downlink control information DCI scheduling PDSCH(s) transmitted by a network device, the downlink control information indicating a first number of TCI states; wherein the first number being an integer greater than 1, and one or more than one row in a TDRA table to which the downlink control information corresponds include more than one SLIV; and a second receiving unit configured to receive one or more than one PDSCH in the PDSCH(s) scheduled by the downlink control information.

1100

Information reception apparatus

1101

First receiving unit

1102

Second receiving unit

**Fig. 11**

**Description**

<u>Field</u>

This disclosure relates to the field of communication technologies.

<u>Background</u>

A physical downlink shared channel (PDSCH) is one of physical downlink channels used in a wireless communication system to carry downlink data. The PDSCH may be scheduled by downlink control information (DCI). The DCI used for scheduling the PDSCH at least includes information indicating resources of the PDSCH. In a current new radio (NR) system, various DCI formats for scheduling the PDSCH have been defined, such as DCI format 1_0 (PDSCH), DCI format 1_1 (PDSCH), and DCI format 1_2 (PDSCH), and information included in DCI and/or sizes of different DCI formats are different, so as to meet different scheduling demands.

The PDSCH may also be semi-statically configured or semi-persistently scheduled. In the new radio NR, the semi-statically configured or semi-persistently scheduled PDSCH is referred to, for example, semi-persistent scheduling (SPS) PDSCH (SPS PDSCH). In some cases, a terminal equipment receives the SPS PDSCH accordingly when a network device activates SPS configuration via the DCI after providing the SPS configuration via radio resource control (RRC) signaling. Furthermore, in addition to scheduling the PDSCH and activating SPS, the DCI may be used to deactivate SPS, or make a cell dormant, etc.

In order for the network device to determine whether the terminal equipment has successfully received downlink data and/or control information, in general, the terminal equipment needs to feed back hybrid automatic repeat request (HARQ) feedback information (such as ACK/NACK). According to scheduling of the network device, the HARQ feedback information may be carried by a physical uplink control channel (PUCCH) or a physical uplink shared channel (PUSCH). Generally, a PUCCH or PUSCH is able to carry one HARQ feedback codebook, the codebook including one or more HARQ feedback information bits.

It should be noted that the above description of the background is merely provided for clear and complete explanation of this disclosure and for easy understanding by those skilled in the art. And it should not be understood that the above technical solution is known to those skilled in the art as it is described in the background of this disclosure.

<u>Summary</u>

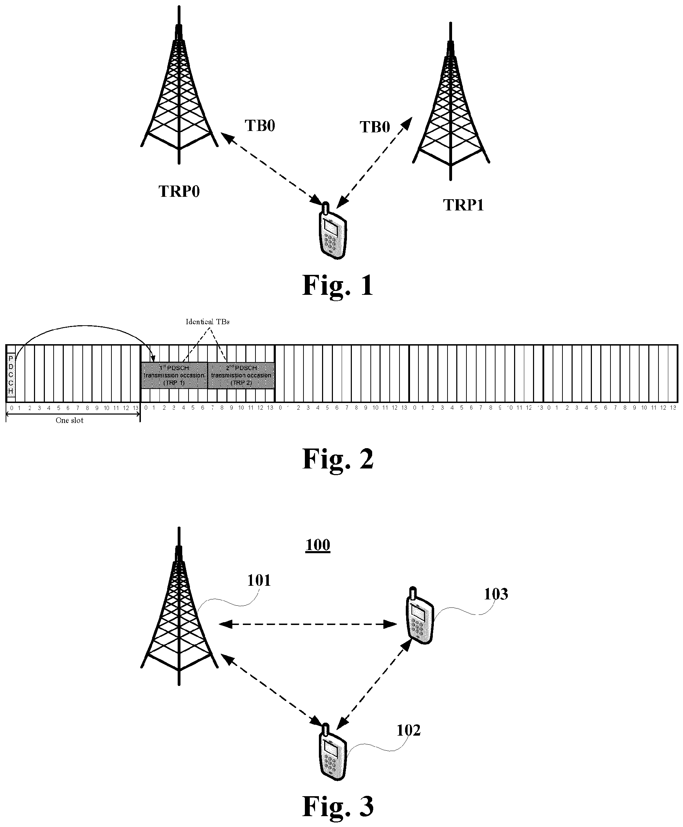

An existing NR system supports multiple transmit receive points (TRPs), and in a multiple TRPs scenario, repeatedly transmitting the same transport block (TB) by different TRPs is supported. FIG. 1 is a schematic diagram of a scenario of two TRPs. As shown in FIG. 1, TRP0 and TRP1 transmit the same TB0 to the terminal equipment. For the mode of repeated transmission of TB, multiple repetition schemes may be supported, including spatial division multiplexing (SDM), frequency division multiplexing (FDM), intra-slot time division multiplexing (TDM) and inter-slot time division multiplexing (TDM), such as 'fdmSchemeA', 'fdmSchemeB', 'tdmSchemeA'. A specific repeating scheme is configurable, such as being configured by a parameter repetitionScheme in higher-layer signaling. If repetitionScheme is set to be 'tdmSchemeA', the repeating scheme adopts 'tdmSchemeA'.

'tdmSchemeA' shall be further described below.

If 'tdmSchemeA' is configured, assuming that two transmission configuration indication (TCI) states are indicated in the DCI, and the terminal equipment shall receive two PDSCH transmission occasions. The two transmission occasions correspond to different TCI states, wherein the first one of PDSCH transmission occasions corresponds to the first one of TCI states, and the second one of PDSCH transmission occasions corresponds to the second one of TCI states.

FIG. 2 is a schematic diagram of the two PDSCH transmission occasions. As shown in FIG. 2, the two PDSCH transmission occasions are in the same slot and do not overlap. Symbols of the first one of PDSCH transmission occasions (1st PDSCH transmission occasion) are indicated by the DCI. The number of symbols of the second one of PDSCH transmission occasions (2nd PDSCH transmission occasion) is identical to the number of the symbols of the first one of PDSCH transmission occasions, wherein a first one of symbols is determined according to offset value of a last symbol relative to the first one of PDSCH transmission occasions. Specifically, its first one of symbols starts from symbols of the offset value after a last symbol of the first one of PDSCH transmission occasions. The offset value may be configured by radio resource control (RRC) signaling (StartingSymbolOffsetK), and is defaulted to 0 when it is not configured. As shown in FIG. 2, the offset value is 0.

Currently, the NR system supports scheduling more than one PDSCH (multi-PDSCH scheduling) by single DCI (PDCCH). However, the above multi-TRP repetition scheme is based on that one DCI is only able to schedule one PDSCH, without taking a case where one DCI schedules more than one PDSCH into account, and no HARQ feedback method in the multi-TRP repetition scheme and/or a case of multi-PDSCH scheduling is specified.

In order to solve at least one of the above problems, embodiments of this disclosure provide an information reception method, information transmission method and information feedback method and apparatuses thereof.

According to one aspect of the embodiments of this disclosure, there is provided an information reception apparatus, applicable to a terminal equipment, the apparatus including:

a first receiving unit configured to receive downlink control information DCI scheduling PDSCH(s) transmitted by a network device, the downlink control information indicating a first number of TCI states; wherein the first number being an integer greater than 1, and one or more than one row in a TDRA table to which the downlink control information corresponds include more than one SLIV; and

a second receiving unit configured to receive one or more than one PDSCH in the PDSCH(s) scheduled by the downlink control information.

According to another aspect of the embodiments of this disclosure, there is provided an information feedback apparatus, applicable to a terminal equipment, the apparatus including:

a second determining unit configured to determine a candidate PDSCH reception occasion set according to a symbol to which a first PDSCH transmission occasion corresponds and/or a symbol to which a second PDSCH transmission occasion corresponds, and/or according to a first allocation table, the first allocation table being related to an offset value between a first PDSCH transmission occasion and a second PDSCH transmission occasion; and

a second processing unit configured to generate and transmit an HARQ-ACK codebook, the codebook including HARQ-ACK information to which the candidate PDSCH reception occasion set corresponds.

According to a further aspect of the embodiments of this disclosure, there is provided an information transmission apparatus, applicable to a network device, apparatus including:

a first transmitting unit configured to transmit downlink control information for scheduling PDSCH(s) to a terminal equipment, the downlink control information indicating a first number of TCI states, wherein the first number being an integer greater than 1, and one or more than one row in a TDRA table to which the downlink control information corresponds include more than one SLIV; and

a second transmitting unit configured to transmit one or more than one PDSCH in the PDSCH(s) scheduled by the downlink control information.

An advantage of the embodiments of this disclosure exists in that in a case where scheduling more than one PDSCH by single DCI is supported, the multi-TRP repetition scheme is also supported. Hence, not only the number of times of monitoring PDCCHs of the terminal equipment may be reduced to lower complexity and power consumption of the terminal equipment in monitoring PDCCHs, but also overhead of resources for transmitting downlink control signaling (DCI) may be lowered to improve data throughput.

An advantage of the embodiments of this disclosure exists in that HARQ feedback may be supported in cases of the multi-TRP repetition scheme and/or multi-PDSCH scheduling, thereby reducing a PDCCH monitoring burden of the UE and lowering power loss and UE complexity.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the spirits and scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising/includes/including" when used in this specification is taken to specify the presence of stated features, integers, steps or components but does not preclude the presence or addition of one or more other features, integers, steps, components or groups thereof.

Brief Description of the Drawings

Elements and features depicted in one drawing or embodiment of the disclosure may be combined with elements and features depicted in one or more additional drawings or embodiments. Moreover, in the drawings, like reference numerals designate corresponding parts throughout the several views and may be used to designate like or similar parts in more than one embodiment.

FIG. 1 is schematic diagram of a multi-TRP scenario;
FIG. 2 is a schematic diagram of two PDSCH transmission occasions;
FIG. 3 is a schematic diagram of a communication system of embodiments of this disclosure;
FIG. 4 is a schematic diagram of an information reception method of embodiments of this disclosure;
FIG. 5 is a schematic diagram of a PDSCH transmission occasion of the embodiments of this disclosure;
FIGs. 6A and 6B are schematic diagrams of PDSCH transmission occasions of the embodiments of this disclosure;
FIGs. 7A and 7B are schematic diagrams of PDSCH transmission occasions of the embodiments of this disclosure;
FIGs. 8A and 8B are schematic diagrams of PDSCH transmission occasions of the embodiments of this disclosure;
FIG. 9 is a schematic diagram of an information transmission method of embodiments of this disclosure;
FIG. 10 is a schematic diagram of an information feedback method of embodiments of this disclosure;
FIG. 11 is a schematic diagram of an information reception apparatus of embodiments of this disclosure;
FIG. 12 is a schematic diagram of an information transmission apparatus of embodiments of this disclosure;
FIG. 13 is a schematic diagram of an information feedback apparatus of embodiments of this disclosure;
FIG. 14 is a schematic diagram of a network device of embodiments of this disclosure;
FIG. 15 is a schematic diagram of a terminal equipment of embodiments of this disclosure;
FIG. 16A is a schematic diagram of a candidate PDSCH reception occasion when time domain bundling is configured; and
FIG. 16B is a schematic diagram of a candidate PDSCH reception occasion when no time domain bundling is configured.

Detailed Description

These and further aspects and features of this disclosure is apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the spirit and terms of the appended claims.

In the embodiments of this disclosure, terms "first", and "second", etc., are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include" and "have" refer to existence of stated features, elements, components, or assemblies, but do not exclude existence or addition of one or more other features, elements, components, or assemblies.

In the embodiments of this disclosure, single forms "a", and "the", etc., include plural forms, and should be understood as "a kind of" or "a type of" in a broad sense, but should not defined as a meaning of "one"; and the term "the" should be understood as including both a single form and a plural form, except specified otherwise. Furthermore, the term "according to" should be understood as "at least partially according to", the term "based on" should be understood as "at least partially based on", except specified otherwise.

In the embodiments of this disclosure, the term "communication network" or "wireless communication network" may refer to a network satisfying any one of the following communication standards: long term evolution (LTE), long term evolution-advanced (LTE-A), wideband code division multiple access (WCDMA), and highspeed packet access (HSPA), etc.

And communication between devices in a communication system may be performed according to communication protocols at any stage, which may, for example, include but not limited to the following communication protocols: 1G (generation), 2G, 2.5G, 2.75G, 3G, 4G, 4.5G, and 5G and new radio (NR) in the future, etc., and/or other communication protocols that are currently known or is developed in the future.

In the embodiments of this disclosure, the term "network device", for example, refers to a device in a communication system that accesses a user equipment to the communication network and provides services for the user equipment. The network device may include but not limited to the following devices: a base station (BS), an access point (AP), a transmission reception point (TRP), a broadcast transmitter, a mobile management entity (MME), a gateway, a server, a radio network controller (RNC), a base station controller (BSC), etc.

The base station may include but not limited to a node B (NodeB or NB), an evolved node B (eNodeB or eNB), and a 5G base station (gNB), etc. Furthermore, it may include a remote radio head (RRH), a remote radio unit (RRU), a relay, or a low-power node (such as a femto, and a pico, etc.). The term "base station" may include some or all of its functions, and each base station may provide communication coverage for a specific geographical area. And a term "cell" may refer to a base station and/or its coverage area, depending on a context of the term.

In the embodiments of this disclosure, the term "user equipment (UE)" or "terminal equipment (TE) or terminal device" refers to, for example, an equipment accessing to a communication network and receiving network services via a network device. The user equipment may be fixed or mobile, and may also be referred to as a mobile station (MS), a terminal, a subscriber station (SS), an access terminal (AT), or a station, etc.

The terminal equipment may include but not limited to the following devices: a cellular phone, a personal digital assistant (PDA), a wireless modem, a wireless communication device, a hand-held device, a machine-type communication device, a lap-top, a cordless telephone, a smart cell phone, a smart watch, and a digital camera, etc.

For another example, in a scenario of the Internet of Things (IoT), etc., the terminal equipment may also be a machine or a device performing monitoring or measurement. For example, it may include but not limited to a machine-type communication (MTC) terminal, a vehicle mounted communication terminal, a device to device (D2D) terminal, and a machine to machine (M2M) terminal, etc.

Moreover, the term "network side" or "network device side" refers to a side of a network, which may be a base station or one or more network devices including those described above. The term "user side" or "terminal side" or "terminal equipment side" refers to a side of a user or a terminal, which may be a UE, and may include one or more terminal equipments described above. "A device" in this text may refer to a network device, and may also refer to a terminal equipment, except otherwise specified.

In the embodiments of this disclosure, a time unit may be a subframe, or a slot, or a set containing at least one time domain symbol. The set of at least one time domain symbol may also be referred to as a mini-slot or a non-slot. For example, in the embodiments of this disclosure, a subframe and a slot are interchangeable, and "a slots" may also be replaced with "a subframe", and this disclosure is not limited thereto. For the sake of convenience, following description shall be given by taking "a slot" as an example; however, it may also be replaced with other time units. In addition, the terms "a time domain resource" and "a resource" are interchangeable.

In the following description, without causing confusion, the terms "uplink control signal" and "uplink control information (UCI)" or "physical uplink control channel (PUCCH)" are interchangeable, and terms "uplink data signal" and "uplink data information" or "physical uplink shared channel (PUSCH)" are interchangeable.

The terms "downlink control signal" and "downlink control information (DCI)" or "physical downlink control channel (PDCCH)" are interchangeable, and the terms "downlink data signal" and "downlink data information" or "physical downlink shared channel (PDSCH)" are interchangeable.

In addition, transmitting or receiving a PUSCH may be understood as transmitting or receiving uplink data carried by the PUSCH, transmitting or receiving a PUCCH may be understood as transmitting or receiving uplink information (e.g. UCI) carried by the PUSCH, transmitting or receiving a PRACH may be understood as transmitting or receiving a preamble carried by the PRACH, transmitting or receiving a PDSCH may be understood as transmitting or receiving downlink data carried by the PDSCH, and transmitting or receiving a PDCCH may be understood as transmitting or receiving downlink information (e.g. DCI) carried by the PDCCH.

In the embodiments of this disclosure, higher-layer signaling may be, for example, radio resource control (RRC) signaling; for example, it is referred to an RRC message, which includes a master information block (MIB), system information, and a dedicated RRC message; or, it is referred to an as an RRC information element (RRC IE). Higher-layer signaling may also be, for example, medium access control (MAC) signaling, or an MAC control element (MAC CE); however, this disclosure is not limited thereto.

Scenarios in the embodiments of this disclosure shall be described below by way of examples; however, this disclosure is not limited thereto.

FIG. 3 is a schematic diagram of a communication system of embodiments of this disclosure, in which a case where terminal equipment and a network device are taken as examples is schematically shown. As shown in FIG. 3, a communication system 100 may include a network device 101 and terminal equipment 102, 103. For the sake of simplicity, an example having only two terminal equipment and one network device is schematically given in FIG. 3; however, the embodiments of this disclosure are not limited thereto.

In the embodiments of this disclosure, existing services or services that may be implemented in the future may be performed between the network device 101 and the terminal equipment 102, 103. For example, such services may include but not limited to an enhanced mobile broadband (eMBB), massive machine type communication (MTC), ultra-reliable and low-latency communication (URLLC), and related communications of reduced capability terminal equipment, etc.

It should be noted that FIG. 3 shows that two terminal equipments 102, 103 are both within coverage of the network device 101. However, this disclosure is not limited thereto, and the two terminal equipment 102, 103 may not be within the coverage of the network device 101, or one terminal equipment 102 is within the coverage of the network device 101 and the other terminal equipment 103 is outside the coverage of the network device 101.

In the embodiments of this disclosure, transport blocks carried by different PDSCHs are identical or different. Therefore, "more than one PDSCH (multiple PDSCHs)" or "at least two PDSCHs" below refers to different PDSCHs carrying different transport blocks. More specifically, the transport blocks carried by different PDSCHs may correspond to identical or different HARQ processes, wherein different HARQ processes are identified by different HARQ process identifiers.

In some embodiments, a PDSCH time domain resource allocation (TDRA) table (or a TDRA table in brief) includes at least one row, which is hereinafter referred to as a PDSCH TDRA configuration (or a TDRA configuration in brief) for ease of description, that is, the PDSCH TDRA table includes at least one PDSCH TDRA configuration. A PDSCH TDRA configuration includes at least one PDSCH time domain resource configuration (or referred to as a time domain resource configuration in brief), which at least includes a symbol position (starting symbol + length) configuration in a slot; in addition, a PDSCH TDRA configuration may further include at least one slot offset K0 configuration, K0 denoting a slot offset between a PDSCH and a PDCCH, and the K0 configuration being included or not included in the PDSCH time domain resource configuration; the PDSCH TDRA configuration may further include other information, which is included or not included in a PDSCH time domain resource configuration, and the embodiments of this disclosure is not limited thereto. Regarding the symbol position configuration in the slot, it includes, for example, a start and length indicator SLIV, the SLIV corresponding to a valid combination of a starting symbol (S) and a length (L), or, for example, corresponding to a starting symbol configuration and a length configuration, the starting symbol configuration and a length configuration being a valid combination.

A method of how to support a multi-TRP repetition transmission scheme in a case where multi-PDSCH scheduling is support shall be described below with reference to embodiments of first and second aspects, and an HARQ feedback method in a case of multi-TRP repetition scheme and/or multi-PDSCH scheduling shall be described below with reference to embodiments of a third aspect.

Embodiments of First aspect

The embodiments of this disclosure provide an information reception method, which shall be described from a terminal equipment side.

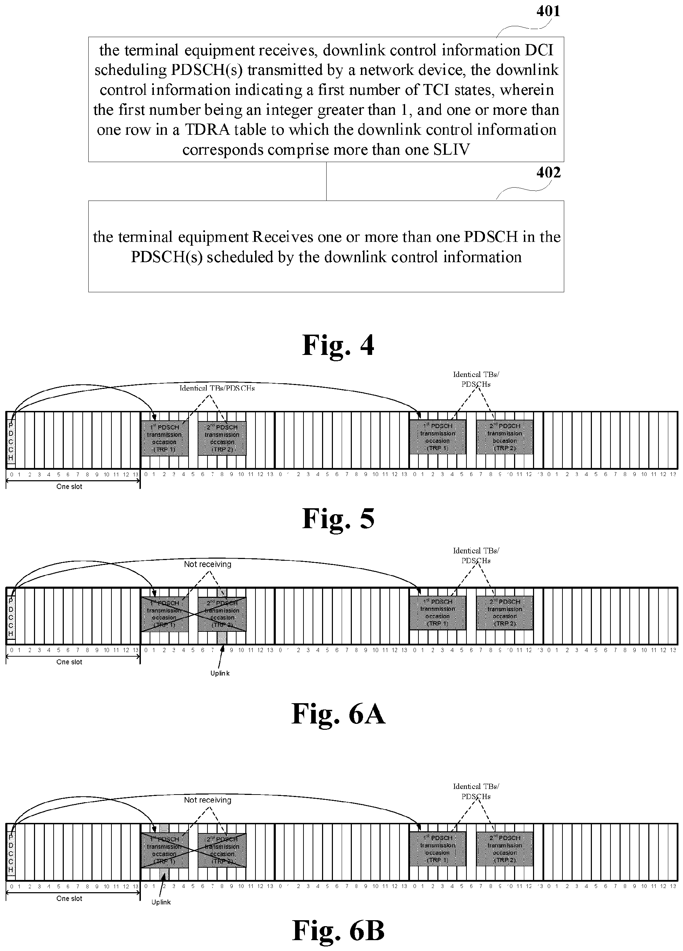

FIG. 4 is a schematic diagram of the information reception method of the embodiments of this disclosure. As shown in FIG. 4, the method includes:

401: the terminal equipment receives, downlink control information DCI scheduling PDSCH(s) transmitted by a network device, the downlink control information indicating a first number of TCI states, wherein the first number being an integer greater than 1, and one or more than one row in a TDRA table to which the downlink control information corresponds include more than one SLIV; and

402: the terminal equipment receives one or more than one PDSCH in the PDSCHs scheduled by the downlink control information.

In some embodiments, the network device may preconfigure a series of channel condition correlation relationships via higher-layer signaling, each correlation relationship is identified by a TCI state. For PDSCH channels, up to 128 groups of such TCI states may be configured, while for PDCCH channels, up to 64 groups of TCI states may be configured. Each TCI state contains a parameter configuring an approximate positioning relationship between a DMRS antenna port and a downlink reference signal (DL RS) in the PDSCH/PDCCH. The downlink reference signal may be a CSI-RS, or may be an SSB. The terminal equipment dynamically evaluates PDCCH/PDSCH channel transmission conditions according to the TCI states.

In some embodiments, the DCI received in 401 is DCI format 1_1.

In some embodiments, the DCI received in 401 may include a TCI field. The TCI field may include an index value, the index value corresponding a first number of TCI states in a predetermined TCI state table, the first number being an integer greater than 1.

In some embodiments, the DCI may include a first information field, which may be a time domain resource allocation domain. The first information field indicates PDSCH time domain resources by indicating an index (a row index, e.g. a value of the row index is greater than or equal to 1) corresponding to the PDSCH TDRA configuration in the PDSCH TDRA table applied by the DCI. In other words, the DCI schedules the PDSCH by indicating the PDSCH TDRA configuration in the PDSCH TDRA table applied thereby, hereinafter referred to as DCI scheduling PDSCH, i.e. the PDSCH indicated by the DCI. For example, the value m of the first information field of the DCI (assuming that m is an integer greater than or equal to 0) corresponds to a PDSCH TDRA configuration with an index m+1 (i.e. an *(m+1)-th* row) in the PDSCH TDRA table applied by the DCI.

In some embodiments, the PDSCH TDRA table may be predefined, or may be configured via higher-layer signaling. The table supports scheduling more than one PDSCH by single DCI, or, in other words, one or more rows in the table include more than one time domain resource configuration (SLIV), such as supporting scheduling more than one PDSCH by single DCI. However, when the DCI applies the table, it may indicate/schedule one PDSCH (for example, a row of the TDRA table indicated by the first information field in the DCI only includes one SLIV), or indicate/schedule more than one PDSCH (for example, a row of the TDRA table indicated by the first information field in the DCI includes more than one SLIV).

In some embodiments, in order to support scheduling multiple PDSCHs (mutli-PDSCH scheduling) by single DCI, configuring a TDRA table used for supporting scheduling multiple (i.e. more than one) PDSCHs by single DCI via RRC signaling (such as *pdsch-TimeDomainAllocationListForMultiPDSCH* or *pdsch-TimeDomainAllocationListForMultiPDSCH-r17)* may be supported. The TDRA table includes at least one time domain resource allocation configuration for scheduling multiple (i.e. more than one) PDSCHs/PUSCHs, time domain resource allocation configuration including, for example, multiple SLIVs, each SLIV corresponding to one PDSCH/PUSCH respectively.

In some embodiments, in a case where the TDRA table is configured, the TDRA table is applied to/corresponds to DCI format 1_1.

In some embodiments, the terminal equipment determines the first number of PDSCH transmission occasions for each PDSCH in the PDSCH(s) scheduled by the downlink control information. Each PDSCH in the PDSCH(s) scheduled by the downlink control information corresponds to the first number of PDSCH transmission occasions. The terminal equipment receives or does not receive PDSCHs at each PDSCH transmission occasion. The first number of PDSCH transmission occasions and how to determine whether to receive or not to receive PDSCHs at each PDSCH transmission occasion shall be described below with examples.

In some embodiments, the DCI indicates/schedules more than one PDSCH, each PDSCH in the more than one PDSCH corresponds to the first number of PDSCH transmission occasions, and the first number of PDSCH transmission occasions to which one PDSCH corresponds carry identical transport blocks, which correspond respectively to the first number of TCI states; numbers of symbols of each PDSCH transmission occasion in the first number of PDSCH transmission occasions are identical, a first one of PDSCH transmission occasions in the first number of PDSCH transmission occasions is determined according to a corresponding time domain resource configuration (such as an SLIV) of a PDSCH indicated/scheduled by the DCI, and a first one of symbols of a subsequent PDSCH transmission occasion is determined according to an offset value relative to a last symbol of the first one of PDSCH transmission occasions. Specifically, the first one of symbols starts at symbols of the offset value after the last symbol of the first one of PDSCH transmission occasion. The offset value may be configured by radio resource control RRC signaling (Starting Symbol OffsetK), and is defaulted to 0 if it not configured.

FIG. 5 is a schematic diagram of a PDSCH transmission occasion. As shown in FIG. 5, taking that the first number is 2 as an example, the DCI indicates two TCI states, and indicates/schedules two PDSCHs (as shown by the arrow in FIG. 4). Each PDSCH corresponds to two PDSCH transmission occasions, and the two PDSCH transmission occasions correspond respectively to the two indicated TCI states, which may also be regarded as corresponding respectively to TRP1 and TRP2. The number of symbols of a second one of PDSCH transmission occasions is identical to that of the first one of PDSCH transmission occasions, and a first one of symbols thereof is determined according to an offset value relative to the last symbol of the first one of PDSCH transmission occasions. Specifically, its first one of symbols starts at symbols of the offset value after the last symbol of the first one of PDSCH transmission occasions. The offset value is 1.

In some embodiments, in 402, each PDSCH in the more than one PDSCH indicated/scheduled by the DCI is determined respectively that whether it is received. The terminal equipment may determine whether the PDSCH received at the PDSCH transmission occasion (or, in other words, whether corresponding PDSCH transmission occasion is received) according to whether the PDSCH transmission occasion collides with semi-statically configured uplink symbols. That the PDSCH transmission occasion collides with semi-statically configured uplink symbols refers to that at least one of symbols to which the PDSCH transmission occasion corresponds overlaps with the semi-statically configured uplink symbols, or, at least one of symbols to which the PDSCH transmission occasion corresponds is semi-statically configured as uplink. That the PDSCH transmission occasion does not collide with semi-statically configured uplink symbols refers to that no symbol in symbols to which the PDSCH transmission occasion corresponds overlaps with semi-statically configured uplink symbols, or, in other words, no symbol in symbols to which the PDSCH transmission occasion corresponds is semi-statically configured as uplink.

In some embodiments, example 1: when a PDSCH has a PDSCH transmission occasion that collides with a semi-statically configured uplink symbol, the terminal equipment does not receive the PDSCH; and when a PDSCH has no PDSCH transmission occasion that collides with a semi-statically configured uplink symbol, the terminal equipment receives the PDSCH. If any of PDSCH transmission occasions to which a PDSCH corresponds collides with a semi-statically configured uplink symbol, the PDSCH is not received (in other words, the PDSCH is not received at a first number of PDSCH transmission occasions to which the PDSCH corresponds, or, the first number of PDSCH transmission occasions is not received). On the contrary, if any of PDSCH transmission occasions to which a PDSCH corresponds does not collide with a semi-statically configured uplink symbol, the PDSCH is received (in other words, the PDSCH is received at a first number of PDSCH transmission occasions to which the PDSCH corresponds).

FIGs. 6A and 6B are schematic diagrams of PDSCH transmission occasions. As shown in FIGs. 6A and 6B, if one (the second one) of two PDSCH transmission occasions corresponding to a first one of PDSCHs indicated/scheduled by the DCI collides with a semi-statically configured uplink symbol, the first one of PDSCHs is not received (in other words, it is not received at both the PDSCH transmission occasions corresponding to the first one of PDSCHs). If all PDSCH occasions corresponding to the second PDSCH indicated/scheduled by the DCI do not collide with a semi-statically configured uplink symbol, the PDSCH is received (in other words, the PDSCH is received at two PDSCH transmission occasions corresponding to the second one of PDSCHs).

In some embodiments, example 2: when a PDSCH has a PDSCH transmission occasion that does not collide with a semi-statically configured uplink symbol, the terminal equipment receives the PDSCH, for example, the terminal equipment receives a PDSCH at the PDSCH transmission occasion that does not collide with a semi-statically configured uplink symbol; and when a PDSCH has no PDSCH transmission occasion that does not collide with a semi-statically configured uplink symbol, the terminal equipment does not receive the PDSCH. If any of PDSCH transmission occasions to which a PDSCH corresponds does not collide with a semi-statically configured uplink symbol, the PDSCH is received (in other words, the PDSCH is received at a PDSCH transmission occasion that does not collide with a semi-statically configured uplink symbol to which the PDSCH corresponds, or, a PDSCH transmission occasion that does not collide with a semi-statically configured uplink symbol is received). On the contrary, if all PDSCH transmission occasions to which a PDSCH corresponds collide with a semi-statically configured uplink symbol, the PDSCH is not received (in other words, the PDSCH is not received at a first number of PDSCH transmission occasions to which the PDSCH corresponds, or, in other words, the first number of PDSCH transmission occasions is not received).

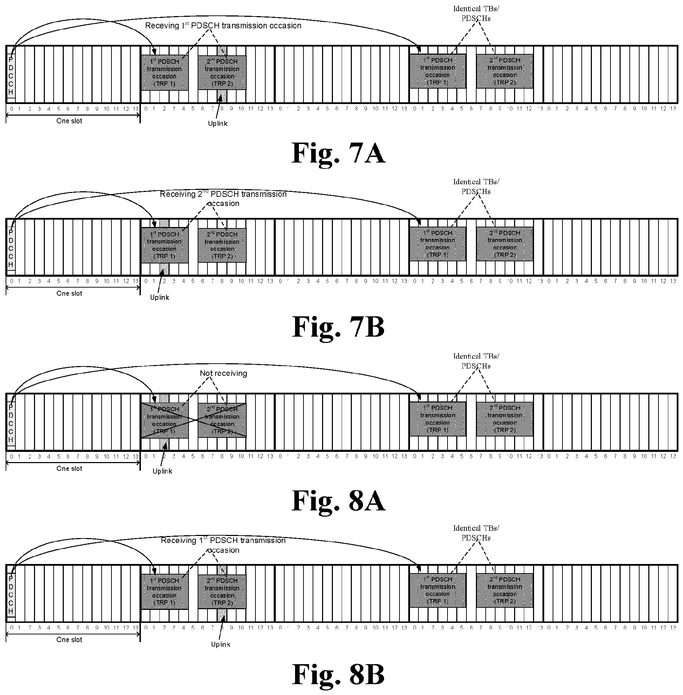

FIGs. 7A and 7B are schematic diagrams of PDSCH transmission occasions. As shown in FIGs. 7A and 7B, if one (the second one) of two PDSCH transmission occasions corresponding to a first one of PDSCHs indicated/scheduled by the DCI collides with a semi-statically configured uplink symbol, the first one of PDSCHs is received (in other words, it is received at the first one of PDSCH transmission occasions corresponding to the first one of PDSCHs). If one of the two PDSCH occasions corresponding to the first one of PDSCHs indicated/scheduled by the DCI collides with a semi-statically configured uplink symbol, the first one of PDSCHs is received (in other words, the PDSCH is received at the second one of PDSCH transmission occasions corresponding to the first one of PDSCHs, and is not received at the first one of PDSCH transmission occasions).

In some embodiments, example 3: when a first one of PDSCH transmission occasions of a PDSCH does not collide with a semi-statically configured uplink symbol, the terminal equipment receives the PDSCH; when a first one of PDSCH transmission occasions of a PDSCH collides with a semi-statically configured uplink symbol, the terminal equipment does not receive the PDSCH. If a first one of PDSCH transmission occasions corresponding to a PDSCH (or, in other words, a time domain resource configuration (SLIV) of the PDSCH indicated by the DCI) does not collide with the semi-statically configured uplink symbol, regardless of whether subsequent PDSCH transmission occasions collide with the semi-statically configured uplink symbol, the PDSCH may be received (in other words, the PDSCH may be received at the first one of PDSCH transmission occasions, or, the PDSCH transmission occasion that does not collide with the semi-statically configured uplink symbol is received). On the contrary, if a first one of PDSCH transmission occasions corresponding to a PDSCH collides with the semi-statically configured uplink symbol, the PDSCH is not received (in other words, it is not received at all first number of PDSCH transmission occasions corresponding to the PDSCH, or in other words, the first number of PDSCH transmission occasion is not received).

FIGs. 8A and 8B are schematic diagrams of PDSCH transmission occasions. As shown in FIG. 8A, if a first one of two PDSCH transmission occasions corresponding to a first one of PDSCHs indicated/scheduled by the DCI collides with a semi-statically configured uplink symbol, the first one of PDSCHs is not received (in other words, it is not received at both the PDSCH transmission occasions corresponding to the first one of PDSCHs, the two PDSCH occasions are not received). As shown in FIG. 8B, if a first one of two PDSCH transmission occasions corresponding to a first one of PDSCHs indicated/scheduled by the DCI does not collide with a semi-statically configured uplink symbol, the first one of PDSCHs is received (in other words, it is received at the first one of PDSCH transmission occasions corresponding to the first one of PDSCHs, and is not received at the second one of PDSCH transmission occasions).

In some embodiments, the DCI may further include a second information field, the second information field (e.g. an HARQ process number) being used to indicate an HARQ process identifier. For each PDSCH in the more than one PDSCH indicated/scheduled by the DCI, it is possibly that all the PDSCHs have corresponding HARQ processes, or only a part thereof have corresponding HARQ processes, and the method may further include: S1: the terminal equipment receives, HARQ process identifiers of the PDSCHs scheduled by the DCI. The terminal equipment may determine whether to allocate HARQ process IDs for the PDSCHs according to whether the PDSCH transmission occasions collide with the semi-statically configured uplink symbol. The terms "process" and "process ID" are hereinafter interchangeable. It should be noted that the method may only include 201 and S1, and does not include 202, and the embodiments of this disclosure is not limited thereto.

In some embodiments, when a PDSCH has a PDSCH transmission occasion that collides with a semi-statically configured uplink symbol, the PDSCH does not have a corresponding HARQ process ID; and when a PDSCH has no PDSCH transmission occasion that collides with a semi-statically configured uplink symbol, the PDSCH has a corresponding HARQ process ID. If any one of PDSCH transmission occasions to which a PDSCH corresponds collides with a semi-statically configured uplink symbol, the PDSCH does not have a corresponding HARQ process identifier, or the terminal equipment skips over the PDSCH in determining an HARQ process identifier, or, in other words, it does not allocate an HARQ process identifier for the PDSCH; otherwise, the PDSCH has a corresponding HARQ process identifier, or, in other words, the terminal equipment does not skip over the PDSCH in determining an HARQ process identifier, or allocates an HARQ process identifier for the PDSCH. As to that the HARQ process identifier corresponding to the PDSCH may be determined according to the HARQ process identifier indicated by the DCI, reference may be made to in existing techniques, which shall not be repeated herein any further. The method may be carried out in combination with example 1 described above, and as shown in FIGs. 6A and 6B, the first one of PDSCHs does not have a corresponding HARQ process identifier, and the second one of PDSCHs has a corresponding HARQ process identifier.

In some embodiments, when a PDSCH has a PDSCH transmission occasion that does not collide with a semi-statically configured uplink symbol, the PDSCH has a corresponding HARQ process ID; and when a PDSCH has no PDSCH transmission occasion that does not collide with a semi-statically configured uplink symbol, the PDSCH has no corresponding HARQ process ID. If any one of PDSCH transmission occasions corresponding to a PDSCH does not collide with a semi-statically configured uplink symbol, the PDSCH has a corresponding HARQ process identifier, or, in other words, the terminal equipment does not skip over the PDSCH in determining an HARQ process identifier, or allocates an HARQ process identifier for the PDSCH; as to that the HARQ process identifier corresponding to the PDSCH may be determined according to the HARQ process identifier indicated by the DCI, reference may be made to in existing techniques, which shall not be repeated herein any further; otherwise, the PDSCH has no corresponding HARQ process identifier, or the terminal equipment skips over the PDSCH in determining the HARQ process identifier, or does not allocate an HARQ process identifier for the PDSCH. The method may be carried out in combination with example 1 or example 2 or example 3 described above, as shown in FIG. 8A, the first PDSCH has no corresponding HARQ process identifier, and as shown in FIGs. 7A, 7B and FIG. 8B, the first one of PDSCHs has a corresponding HARQ process identifier.

In some embodiments, when a first one of PDSCH transmission occasions of a PDSCH does not collide with a semi-statically configured uplink symbol, the PDSCH has a corresponding HARQ process ID; and when a first one of PDSCH transmission occasions of a PDSCH collides with a semi-statically configured uplink symbol, the PDSCH has no corresponding HARQ process ID. If a first one of PDSCH transmission occasions corresponding to a PDSCH (or, in other words, a time domain resource configuration (SLIV) of the PDSCH indicated by the DCI) does not collide with a semi-statically configured uplink symbol, regardless of whether subsequent PDSCH transmission occasions collide with the semi-statically configured uplink symbol, the PDSCH has a corresponding HARQ process identifier, or, in other words, the terminal equipment does not skip over the PDSCH in determining an HARQ process identifier, or allocates an HARQ process identifier for the PDSCH; as to that the HARQ process identifier corresponding to the PDSCH may be determined according to the HARQ process identifier indicated by the DCI, reference may be made to in existing techniques, which shall not be repeated herein any further; otherwise, the PDSCH has no corresponding HARQ process identifier, or the terminal equipment skips over the PDSCH in determining the HARQ process identifier, or does not allocate an HARQ process identifier for the PDSCH. The method may be carried out in combination with example 1 or example 3 described above, as shown in FIG. 8A, the first one of PDSCHs has no corresponding HARQ process identifier, and as shown in FIG. 8B, the first one of PDSCHs has a corresponding HARQ process identifier.

In some embodiments, the DCI only indicates/schedules one PDSCH, and the table applied by the DCI supports scheduling more than one PDSCH by single DCI (one or more rows of the table include more than one SLIV). For example, scheduling more than one PDSCH by single DCI is supported, but when the DCI applies the table, it only indicates/schedules one PDSCH (for example, a row of the TDRA table indicated by a first information field in the DCI includes only one SLIV), that is, even if a corresponding DCI format of the DCI may indicate/schedule more than one PDSCH, the DCI indicates/schedules only one PDSCH, the PDSCH corresponding to two PDSCH transmission occasions. The terminal equipment receives the PDSCH at the first number of PDSCH transmission occasions, or, the terminal equipment receives the PDSCH at one or more of the first number of PDSCH transmission occasions according to whether it collides with a semi-statically configured uplink symbol, such as receiving the PDSCH at a PDSCH transmission occasion that does not collide with the semi-statically configured uplink symbol. Or, in other words, the terminal equipment may possibly receive the two PDSCH transmission occasions, or may receive one or more PDSCH transmission occasions according to whether it collides with the semi-statically configured uplink symbol, such as receiving a PDSCH transmission occasion that does not collide with the semi-statically configured uplink symbol.

In some embodiments, the terminal equipment determines PDSCH transmission occasions of the first number for valid PDSCHs in the PDSCH(s) scheduled by the downlink control information. The valid PDSCHs in the PDSCHs scheduled by the downlink control information correspond to the first number of PDSCH transmission occasions. The terminal equipment does not determine the first number of PDSCH transmission occasions for invalid PDSCHs in the PDSCHs scheduled by the downlink control information. The terminal equipment receives or does not receive PDSCHs at each PDSCH transmission occasion. That is, there are corresponding PDSCH transmission occasions only for the valid PDSCHs, and there is no corresponding PDSCH transmission occasion for the invalid PDSCHs. Example 3 above is also applicable here, assuming that the first one of PDSCHs is determined to be valid, the first one of PDSCHs corresponds to two PDSCH transmission occasions, and the terminal equipment receives the first one of PDSCHs at a first one of PDSCH transmission occasions to which the first one of PDSCHs corresponds, and does not receive the first one of PDSCHs at a second one of transmission occasions to which the first one of PDSCHs corresponds.

In some embodiments, the DCI indicates/schedules only one valid PDSCH, the valid PDSCH being a PDSCH with corresponding time domain resource configuration (such as an SLIV) not conflicting with a semi-statically configured uplink symbol. The DCI may indicate/schedule one or more PDSCHs, but there is only one valid PDSCH therein. For example, the table applied by the DCI supports scheduling more than one PDSCH by single DCI (one or more rows of the table include more than one SLIV). For example, scheduling more than one PDSCH by single DCI is supported, but when the DCI applies the table, it indicates/schedules only one PDSCH (for example, a row of the TDRA table indicated by a first information field in the DCI includes only one SLIV), and the PDSCH is a valid PDSCH; or, when the DCI applies the table, it indicates/schedules more than one PDSCH, the more than one PDSCH including only one valid PDSCH. That is, even if the corresponding DCI format of the DCI may indicate/schedule more than one PDSCH, the DCI indicates/schedules only one valid PDSCH.

In some embodiments, the valid PDSCH corresponds to two PDSCH transmission occasions. That is, the terminal equipment determines whether to apply a multi-TRP repetition transmission scheme 'tdmSchemeA' according to the number of valid PDSCHs indicated/scheduled by the DCI. When the number of valid PDSCHs is 1, the multi-TRP repetition transmission scheme 'tdmSchemeA' is applied. The terminal equipment receives the valid PDSCH at the first number of PDSCH transmission occasions, or receives the valid PDSCH at one or more of the first number of PDSCH transmission occasions according to whether it collides with the semi-statically configured uplink symbol, such as receiving the valid PDSCH at a PDSCH transmission occasion that does not collide with the semi-statically configured uplink symbol. Or, in other words, the terminal equipment may possibly receive the two PDSCH transmission occasions, or receive one or more PDSCH transmission occasions according to whether it collides with the semi-statically configured uplink symbol, such as receiving a PDSCH transmission occasion that does not collide with the semi-statically configured uplink symbol.

In some embodiments, the first number of PDSCH transmission occasions include a first PDSCH transmission occasion and a second PDSCH transmission occasion, and the method may further include (not shown): the terminal equipment determines a candidate PDSCH reception occasion set according to a symbol to which the first PDSCH transmission occasion corresponds and/or a symbol to which the second PDSCH transmission occasion corresponds, and/or according to a first allocation table, the first allocation table being related to an offset value between a first PDSCH transmission occasion and a second PDSCH transmission occasion; and the terminal equipment generates and transmits an HARQ-ACK codebook, the codebook including HARQ-ACK information to which the candidate PDSCH reception occasion set corresponds. That is, the terminal equipment generates the HARQ feedback information for the PDSCHs received or not received in 402, and transmits it to the network device. A method for generating and transmitting the feedback information shall be described in embodiments of a third aspect, which shall not be repeated herein any further. That is, the embodiments of the first aspect and the embodiments of the third aspect may be implemented separately or in a combined manner, and the embodiments of this disclosure is not limited thereto.

It can be seen from the above embodiment that in a case where scheduling more than one PDSCH by single DCI is supported, the multi-TRP repetition scheme is also supported. Hence, not only the number of times of monitoring PDCCHs of the terminal equipment may be reduced to lower complexity and power consumption of the terminal equipment in monitoring PDCCHs, but also overhead of resources for transmitting downlink control signaling (DCI) may be lowered to improve data throughput.

Embodiments of Second aspect

The embodiments of this disclosure provide an information transmission method, which shall be described from a network device side.

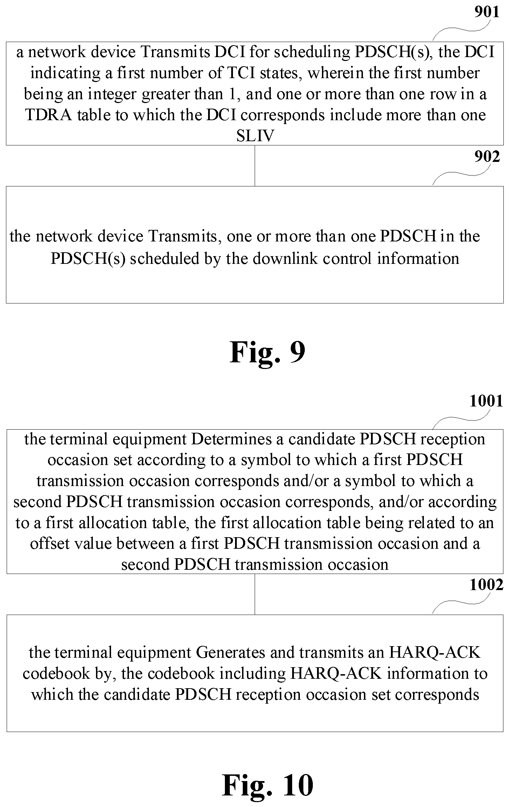

FIG. 9 is a schematic diagram of the information transmission method of the embodiments of this disclosure. As shown in FIG. 9, the method includes:

901: the network device transmits downlink control information for scheduling PDSCH(s) to a terminal equipment, the downlink control information indicating a first number of TCI states, wherein the first number being an integer greater than 1, and one or more than one row in a TDRA table to which the downlink control information corresponds include more than one SLIV; and

902: the network device transmits, one or more than one PDSCH in the PDSCH(s) scheduled by the downlink control information.

In some embodiments, implementations of 901-902 correspond to 401-402 in the embodiments of the first aspect, and shall not be described herein any further.

It can be seen from the above embodiments that in a case where scheduling more than one PDSCH by single DCI is supported, the multi-TRP repetition scheme is also supported. Hence, not only the number of times of monitoring PDCCHs of the terminal equipment may be reduced to lower complexity and power consumption of the terminal equipment in monitoring PDCCHs, but also overhead of resources for transmitting downlink control signaling (DCI) may be lowered to improve data throughput.

Embodiments of Third aspect

The embodiments of this disclosure provide an information feedback method, which shall be described from a terminal equipment side.

FIG. 10 is a schematic diagram of the information feedback method of the embodiments of this disclosure. As shown in FIG. 10, the method includes:

1001: the terminal equipment determines a candidate PDSCH reception occasion set according to a symbol to which a first PDSCH transmission occasion corresponds and/or a symbol to which a second PDSCH transmission occasion corresponds, and/or according to a first allocation table, the first allocation table being related to an offset value between a first PDSCH transmission occasion and a second PDSCH transmission occasion; and

1002: the terminal equipment generates and transmits an HARQ-ACK codebook , the codebook including HARQ-ACK information to which the candidate PDSCH reception occasion set corresponds.

In some embodiments, the terminal equipment needs to perform HARQ-ACK feedback on the received PDSCHs (such as the PDSCHs scheduled by the DCI or PDSCHs of SPS) or DCI (such as DCI used for deactivating SPS). The HARQ-ACK feedback information may be carried by an HARQ-ACK codebook (such as a Type-1 HARQ-ACK codebook, or an HARQ-ACK codebook referred to as a semi-static HARQ-ACK codebook), the codebook including HARQ-ACK information bits of one or more serving cells. Following shall be given only for how to determine HARQ-ACK information bits of one serving cell. In a case where the codebook includes HARQ-ACK information bits of multiple serving cells, method for determining HARQ-ACK information bits of each serving cell is identical to that for determining HARQ-ACK information bits of previous one serving cell. HARQ-ACK information bits of multiple serving cells are arranged in a certain order in the codebook, which shall not be repeated herein any further. In the following description, the terms "HARQ-ACK", "HARQ feedback" and "HARQ-ACK feedback" are interchangeable.

In some embodiments, the codebook includes HARQ-ACK information bits to which a second number (A) of candidate PDSCH reception occasions correspond, the second number being a natural number. The second number (A) of candidate PDSCH reception occasions correspond to the same serving cell (i.e. the above-described serving cell), that is, the second number (A) of candidate PDSCH reception occasions belong to a candidate PDSCH reception occasion set $M_{A,C}$ of the serving cell. In the related art, as scheduling one PDSCH by single DCI is only supported, each PDSCH TDRA configuration includes only one PDSCH time domain resource configuration. Therefore, in determining the candidate PDSCH reception occasion set, only a case where each PDSCH TDRA configuration includes only one PDSCH time domain resource configuration (i.e. symbol position (starting symbol + length) configuration, e.g. SLIV in a slot) is taken into account. And furthermore, in the related art, a repetition transmission scheme of identical TBs in the multi-TRP scenario (such as 'tdmSchemeA') is not taken into account. In this disclosure, in order to support scheduling more than one PDSCH by single DCI and/or the repetition transmission scheme of identical TBs in the multi-TRP scenario (such as 'tdmSchemeA'), in determining the candidate PDSCH reception occasion set, the symbol to which the first PDSCH transmission occasion corresponds and/or the symbol to which the second PDSCH transmission occasion corresponds is/are taken into account, and/or, the candidate PDSCH reception occasion set is determined according to a first allocation table related to an offset value between the first PDSCH transmission occasion and the second PDSCH transmission occasion. By taking the above factors into account, HARQ-ACK information feedback in the scenario of scheduling more than one PDSCH by single DCI and/or the repetition transmission scheme of identical TBs in the multi-TRP scenario (such as 'tdmSchemeA') may be supported, thereby reducing a PDCCH monitoring burden of the UE and lowering power loss and UE complexity, which shall be described below respectively.

In some embodiments, before determining a candidate PDSCH reception occasion, the terminal equipment needs to determine HARQ-ACK information feedback timing (that is, the terminal equipment needs to determine a slot (an uplink slot) for transmitting a HARQ-ACK information).

In some embodiments, the method may further include (not shown): the terminal equipment receives the DCI, and determines a slot needing to transmit the HARQ-ACK information according to a third information field in the DCI used to indicate the HARQ-ACK information feedback timing (PDSCH-to-HARQ_feedback timing indicator field). For example, the DCI may be the DCI in 401 in the embodiments of the first aspect, indicates a first number of TCI states, and schedules at least one PDSCH, wherein, the first number being an integer greater than 1; and each PDSCH in the at least one PDSCH corresponds to the first number of PDSCH transmission occasions. Reference may be made to the embodiments of the first aspect for implementation of the DCI, which shall not be repeated herein any further.

In some embodiments, a HARQ-ACK information (or HARQ-ACK codebook) is carried by a PUCCH or PUSCH. A HARQ-ACK feedback timing shall be described below by taking that the HARQ-ACK information is carried by the PUCCH as an example. Optionally, the PUCCH below may be replaced with a PUSCH, which is not limited in this disclosure.

In some embodiments, the DCI may include a fourth information field which may be an HARQ-ACK feedback timing indicator (i.e. PDSCH-to-HARQ_feedback timing indicator) field. The fourth information field is used to indicate the HARQ-ACK information feedback timing k, or, the DCI may not include the fourth information field, and the terminal equipment receives second configuration information (such as *dl-DataToUL-ACK* or *dl-DataToUL-ACK-ForDCIFormat1_2* for DCI format 1_2) configured by higher-layer signaling, the second configuration information being used to indicate a HARQ-ACK information feedback timing k, or, the terminal equipment receives second configuration information (such as *dl-DataToUL-ACK* or *dl-DataToUL-ACKForDCIFormat1_2* for DCI format 1_2) configured by higher-layer signaling, the second configuration information being used to configure multiple HARQ ACK information feedback timings. The DCI may also include the fourth information field, and the second information field is used to indicate one HARQ-ACK information feedback timing k from multiple feedback timings configured by the second configuration information.

For example, HARQ-ACK information corresponding to one or more PDSCHs scheduled by the DCI may be fed back in the same PUCCH. Or, HARQ-ACK information corresponding to one or more PDSCHs scheduled by the DCI may be fed back in different PUCCHs (of a slot).

For example, the HARQ-ACK information of the more than one PDSCH may be fed back on a PUCCH. Taking that $2^{\mu DL-\mu UL} = 1$ for example, the terminal equipment transmits the HARQ-ACK information at a slot with an index n + k (slot n + k), wherein, a slot with an index n (slot n) is an ending slot of a last PDSCH in the more than one PDSCH, n and k are integers greater than 0, that is, the ending slot of the last PDSCH is n, k is an offset between a feedback slot of the HARQ-ACK information and the slot n, and a relationship between a downlink ending slot n of the PDSCH and an index of its corresponding uplink slot may be determined according to uplink and downlink subcarrier spacings, and reference may be made to the related art, with steps thereof being not going to be repeated herein any further.

In some embodiments, the terminal equipment may determine the candidate PDSCH reception occasions and generate a corresponding codebook after determining a time domain position or a slot where the HARQ-ACK information needs to be fed back. How to determine the candidate PDSCH reception occasions shall be described below.

In some embodiments, in order to determine the candidate PDSCH reception occasion set, downlink slots that may possibly include (or correspond to) a candidate PDSCH reception occasion need to be determined.

In some embodiments, the downlink slot is determined according to a slot timing value $K_1$.

For example, for the slot needing to transmit the HARQ-ACK information, such as a slot $n_u$, according to a slot timing value $K_1$ set associated with an active uplink bandwidth part (UL BWP), one or more downlink slots $n_D$ to which each $K_1$ in the $K_1$ set corresponds may be respectively determined, wherein, $K_1$ denotes an offset value of the PDSCH relative to the HARQ-ACK information feedback slot $n_D$. In determining the one or more downlink slots to which each $K_1$ corresponds, optionally, subcarrier spacings between uplink and downlink bandwidth parts need to be taken into account, and one $K_1$ may possibly correspond to multiple downlink slots. Reference may be made to the related art, and the embodiments of this disclosure is not limited thereto.

In some embodiments, reference may be made to the related art in determining the $K_1$ set associated with the active uplink bandwidth part (UL BWP). For example, for a downlink slot $n_d$, PDSCH time domain resource configuration to which the slot (downlink slot) corresponds is determined, and whether there is a corresponding candidate PDSCH reception occasion in the slot is determined, thereby determining the candidate PDSCH reception occasion set. It should be noted that the determinations of each downlink slots and the PDSCH time domain resource configuration to which the slots correspond may be executed sequentially or simultaneously, and this disclosure is not limited thereto.

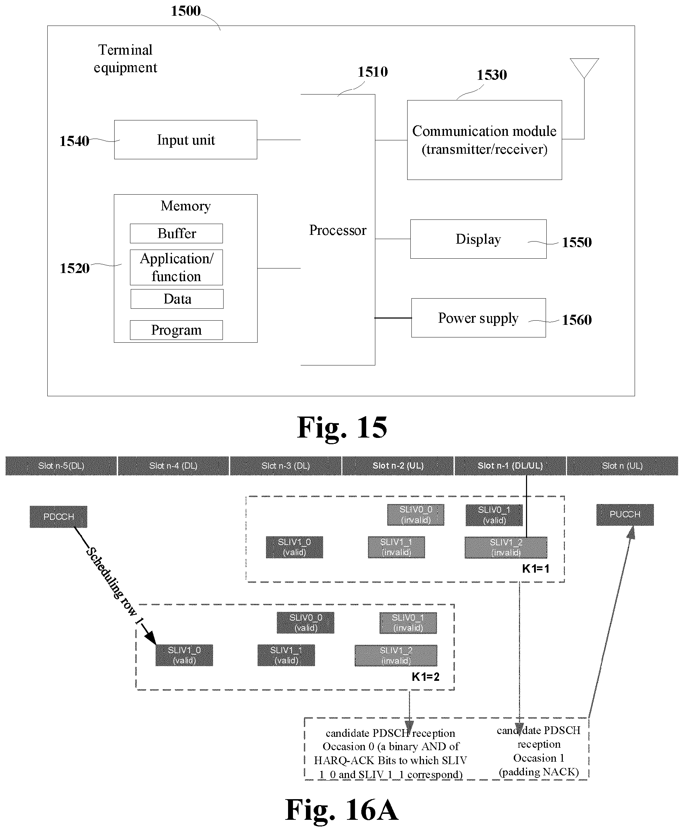

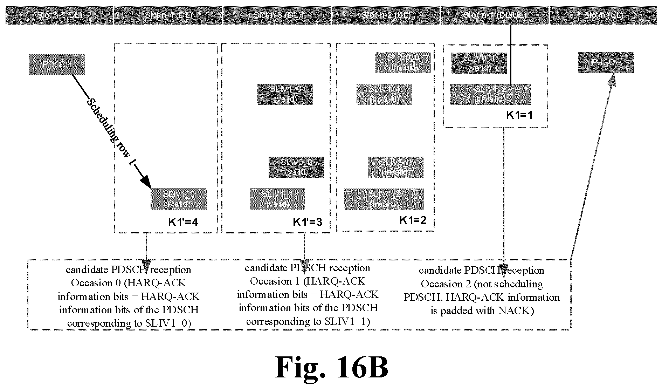

For example, in the related art, whether the PDSCH time domain resource configuration (such as SLIV configuration) collides with the semi-statically configured uplink symbol is only taken into account, so as to determine whether there is a corresponding candidate PDSCH reception occasion, which shall be described below with reference to FIGs. 16A and 16B.

As shown in FIG. 16A, in a case where the HARQ feedback codebook is configured with time domain bundling (for example, enableTimeDomainHARQ-Bundling is carried by RRC signaling, and the HARQ feedback codebook enables the time domain bundling), if a row in the TDRA table includes an SLIV that does not collide with semi-static configuration, the row is reserved, that is, if at least one row in the TDRA table includes an SLIV that does not collide with the semi-static configuration, a corresponding candidate PDSCH reception occasion is reserved. For the HARQ feedback slot $n_u$, assuming that the TDRA table has only two rows, row 0 and row 1, wherein row 0 includes two PDSCH time domain resource configurations, SLIV 0_0, SLIV 0_1, and row 1 includes three PDSCH time domain resource configurations, SLIV 1_0, SLIV 1_1, and SLIV 1_2, and the K1 set includes {1,2}, wherein for a Slot n-2, n, symbols are all uplink symbols (semi-static configurations), while in Slot n-1, some symbols are uplink symbols, some are uplink (UL) symbols, and symbols in remaining slots are all downlink (DL) symbols. Hence, for K1=1, SLIV 0_1 and SLIV 1_0 are valid PDSCHs, for K1=2, SLIV 0_0, SLIV 1_0, and SLIV 1_1 are valid PDSCHs, and there exist a candidate PDSCH reception occasion 1 corresponding to K1=1 and a candidate PDSCH reception occasion 0 corresponding to K1=2, respectively.

As shown in FIG. 16B, in a case where the HARQ feedback codebook is not configured with time domain bundling, for the HARQ feedback slot $n_u$, assuming that the TDRA table has only two rows, row 0 and row 1, where row 0 includes two PDSCH time domain resource configurations, SLIV 0_0, SLIV 0_1, and row 1 includes three PDSCH time domain resource configurations, SLIV 1_0, SLIV 1_1, and SLIV 1_2, and the K1 set includes {1,2}, and may further include {3,4} after being extended according to the related art, wherein for a Slot n-2, n, symbols are all uplink symbols (semi-static configurations), while in Slot n-1, some symbols are uplink symbols, some are uplink (UL) symbols, and symbols in remaining slots are all downlink (DL) symbols. Hence, for K 1 = 1 (Slot n-1), SLIV 0_1 is a valid PDSCH, for K1=2 (Slot n-2), there exists no valid PDSCH, for K1'=3 (Slot n-3), SLIV 0_0 and SLIV 1_1 are valid PDSCHs, for K1'=4 (Slot n-4), SLIV 1_0 is a valid PDSCH, and there exists a candidate PDSCH reception occasion 2 corresponding to K1=1, a candidate PDSCH reception occasion 1 corresponding to K1'=3 and a candidate PDSCH reception occasion 1 corresponding to K1'=4, respectively.

A difference from the related art is that in this disclosure, symbols corresponding to the first PDSCH transmission occasion and/or symbols corresponding to the second PDSCH transmission occasion need to be taken into account, and/or, the first allocation table related to the offset value between the first PDSCH transmission occasion and the second PDSCH transmission occasion.

In some embodiments, the first PDSCH transmission occasion and the second PDSCH transmission occasion correspond to the same PDSCH in at least one PDSCH scheduled by the DCI. For example, when each PDSCH in the at least one PDSCH is associated with the first number of PDSCH transmission occasions, a first one of PDSCH transmission occasions in the first number of PDSCHs is referred to as a first PDSCH transmission occasion, and a second one or a last one of PDSCH transmission occasions in the first number of PDSCHs is referred to as a second PDSCH transmission occasion. The first PDSCH transmission occasion and the second PDSCH transmission occasion correspond to different TCI states (TRPs), but carry identical TBs. The first PDSCH transmission occasion is determined according to the SLIV indicated by the DCI, and the second PDSCH transmission occasion is determined according to the first PDSCH transmission occasion and the offset value. For example, the offset value is a time domain offset value between a last symbol of the first PDSCH transmission occasion and a first symbol of the second PDSCH transmission occasion. Reference may be made to the embodiments of the first aspect for a method for determining the offset value, which shall not be repeated herein any further.

In some embodiments, in order to support scheduling more than one PDSCH by single DCI and/or the repetition transmission scheme of identical TBs in the multi-TRP scenario (such as 'tdmSchemeA'), whether a slot has a corresponding candidate PDSCH reception occasion is determined according to whether symbols corresponding to the first PDSCH transmission occasion and/or the second PDSCH transmission occasion in the PDSCH time domain resource configuration to which the slot (downlink slot) corresponds collide with the semi-statically configured uplink symbol. For example, when the symbols corresponding to the first PDSCH transmission occasion and/or the second PDSCH transmission occasion collide with the semi-statically configured uplink symbol, it is determined that the slot has no corresponding candidate PDSCH reception occasion; otherwise, it has a corresponding candidate PDSCH reception occasion.

In some embodiments, the first allocation table is used to determine a candidate PDSCH reception occasion and/or is used to schedule a PDSCH.

In some embodiments, the PDSCH TDRA configuration and/or an index to which the configuration corresponds may be included in the first allocation table. For example, the first allocation table may be determined according to PDSCH TDRA tables that may be applied by the DCI formats (the tables support scheduling more than one PDSCH by single DCI, and reference may be made to the embodiments of the first for details), and then the PDSCH time domain resource configuration may be determined according to the first allocation table. The first allocation table is also associated with an active DL BWP. The first allocation table is a union of time domain resource allocation tables of DCI formats needing to be monitored configured by the terminal equipment on a serving cell c. For example, the first allocation table may include a union of all rows in PDSCH TDRA tables applied by the DCI formats needing to be monitored, and configuration of each row is identical to that in the PDSCH TDRA table. For example, for a specific active DL BWP, Table 1 is a table of examples of the first allocation table. As shown in Table 1, a PDSCH TDRA configuration (corresponding to a row in the first allocation table) includes at least one PDSCH time domain resource configuration, the PDSCH time domain resource configuration at least including a symbol position (starting symbol + length) configuration in a slot; in addition, a PDSCH TDRA configuration may (optionally) include at least one slot offset K0 configuration, K0 denoting a slot offset between a PDSCH and a PDCCH; moreover, a PDSCH TDRA configuration may include other information (such as a mapping mode), configuration of the other information being included or not included in the PDSCH time domain resource configuration. Furthermore, if the terminal equipment is configured with *ReferenceofSLIV-ForDCIFormat1_2*, a new row needs to be added on the basis of a PDSCH TDRA table of DCI_format1_2, which shall not be enumerated herein any further, and reference may be made to the related art for details.

Table 1

| R (Row index) | $K_0$ | start and length indicators *SLIV* | PDSCH mapping type |
|---|---|---|---|
| | | | |

In some embodiments, the first allocation table (Table 1) may be extended according to the above offset value. For example, for each existing SLIV in the first allocation table, it may be taken as the first PDSCH transmission occasion, a second PDSCH transmission occasion to which each SLIV corresponds may be determined according to the above offset value, and the second PDSCH transmission occasion is added to the first allocation table (by adding row indices and/or adding SLIVs to which each row corresponds).

In some embodiments, the candidate PDSCH reception occasions are determined according to whether the PDSCH time domain resource configuration (such as SLIV) in each row of the extended first allocation table (the first allocation table extended according to the offset value, or the first allocation table is related to the offset value) collides with an uplink symbol. For example, when time domain bundling is configured, for a Ki, if at least one SLIV in at least one row of the first allocation table does not collide with the semi-statically configured uplink symbol, it is determined that there exists a corresponding candidate PDSCH reception occasion; otherwise, there exists no corresponding candidate PDSCH reception occasion. As the at least one SLIV in the at least one row may possibly be the first PDSCH transmission occasion, or may possibly be the second PDSCH transmission occasion, it may also be deemed that there exists a corresponding candidate PDSCH reception occasion when symbols of at least one first PDSCH transmission occasion and/or symbols of at least one second PDSCH transmission occasion do not collide with the semi-statically configured uplink symbol; otherwise, there exists no corresponding candidate PDSCH reception occasion. For a case where time domain bundling is not configured, when at least one SLIV corresponding to a slot in the first allocation table corresponding to $K_1$ does not collide with the semi-statically configured uplink symbol, it is determined that there exists a corresponding candidate PDSCH reception occasion; otherwise, there exists no corresponding candidate PDSCH reception occasion.

It should be noted that the first allocation table is not extended according to the offset value. For each existing SLIV in the first allocation table, it is used as the first PDSCH transmission occasion. The candidate PDSCH reception occasions are determined according to whether the PDSCH time domain resource configuration (such as SLIV) in each row of the first allocation table that is not extended according to the offset value collides with the uplink symbol. For example, in the case where time domain bundling is configured, for a K1, when at least one SLIV in at least one row of the first allocation table that is not extended according to the offset value does not collide with the semi-statically configured uplink symbol, it is determined that there exists a corresponding candidate PDSCH reception occasion; otherwise, there is no corresponding candidate PDSCH reception occasion. As each SLIV is equivalent to the first PDSCH transmission occasion, it may also be deemed that it may be determined that there exists a corresponding candidate PDSCH reception occasion when a symbol of at least one first PDSCH transmission occasion does not collide with the semi-statically configured uplink symbol; otherwise, it may be determined that there exists no corresponding candidate PDSCH reception occasion. For the case where time domain bundling is not configured, when at least one SLIV corresponding to the slot corresponding to a K1 in the first allocation table that is not extended according to the offset value does not collide with the semi-statically configured uplink symbol, it is determined that there exists a corresponding candidate PDSCH reception occasion; otherwise, there exists no corresponding candidate PDSCH reception occasion.

In some embodiments, in 1002, after determining the candidate PDSCH reception occasion set, the HARQ-ACK codebook including the HARQ-ACK information to which the candidate PDSCH reception occasion set corresponds is generated. How to generate the codebook according to the candidate PDSCH reception occasion set shall be further described below.

In some embodiments, a size of the codebook does not dynamically vary with an actual data scheduling situation, but is determined according to a preconfigured (e.g. configured by higher-layer signaling) or predefined parameter. How to determine HARQ-ACK information bits of a serving cell shall be described below only.

In some embodiments, in the case where time domain bundling is not configured, the number of HARQ-ACK information bits to which a candidate PDSCH reception occasion of a serving cell corresponds is related to an HARQ spatial bundling parameter (*harq-ACK-SpatialBundlingPUCCH*), a code block group (CBG) configuration parameter (*PDSCH-CodeBlockGroupTransmission*) and a supported maximum codeword parameter (*maxNrofCodeWordsScheduledByDCI*) configured by the cell, as shown in Table 2 below in which that the HARQ-ACK information is fed back on a PUCCH is taken as an example:

Table 2

| *harq-ACK-SpatialBundlingPUCCH* | *PDSCH-CodeBlockGroupTransmission* | *maxNrofCodeWordsScheduledByDCI=2* | HARQ-ACK information bits for a candidate PDSCH reception occasion |
|---|---|---|---|
| No | No | yes | 2 bits, for a transport block (TB) |
| yes | / | yes | 1 bit |

(continued)

| harq-ACK-SpatialBundlingPUCCH | PDSCH-CodeBlockGroupTransmission | maxNrofCodeWordsScheduledByDCI=2 | HARQ-ACK information bits for a candidate PDSCH reception occasion |
|---|---|---|---|
| / | yes | yes | $2* N_{HARQ-ACK,c}^{CBG/TB,max}$ bits, each $N_{HARQ-ACK,c}^{CBG/TB,max}$ bits for a TB |
| / | yes | yes | $N_{HARQ-ACK,c}^{CBG/TB,max}$ bits |
| No | No | No | 1 bit |

What described above is illustrative only, and modes for determining the number of HARQ-ACK information bits corresponding to the candidate PDSCH reception occasion of a serving cell and bit values are not limited thereto. For example, in the case where time domain bundling is configured, bit values of the HARQ-ACK feedback information corresponding to the (valid) PDSCH associated with the candidate PDSCH reception occasion may be logically summed up, and a value of the binary AND is taken as the bit value of the HARQ-ACK information corresponding to the candidate PDSCH reception occasion. If a candidate PDSCH reception occasion has no corresponding PDSCH, HARQ-ACK information bits to which it corresponds are set to be NACK, which shall not be repeated herein any further. As shown in FIG. 16A, a bit value of HARQ-ACK information to which the candidate PDSCH reception occasion 0 corresponds is a binary AND of bit values of HARQ-ACK information to which SLIV 1_0 and SLIV 1_1 correspond, and the bit value of HARQ-ACK information to which the candidate PDSCH reception occasion 0 corresponds is NACK. As shown in FIG. 16B, the bit value of the HARQ-ACK information to which the candidate PDSCH reception occasion 0 corresponds is the bit value of the HARQ-ACK information of the PDSCH to which SLIV 1_0 corresponds, the bit value of the HARQ-ACK information to which the candidate PDSCH reception occasion 1 corresponds is the bit value of the HARQ-ACK information of the PDSCH to which SLIV 1_1 corresponds, and the bit value of the HARQ-ACK information to which the candidate PDSCH reception occasion 1 corresponds is NACK.

In some embodiments, as one candidate PDSCH reception occasion corresponds to one PDSCH, the HARQ-ACK information bits corresponding to each candidate PDSCH reception occasion are arranged in an order of a second number of candidate PDSCH reception occasions in the candidate PDSCH reception occasion set, so as to obtain HARQ-ACK information bits of a serving cell. As described above, in the case where the codebook includes the HARQ-ACK information bits of a serving cell, the HARQ-ACK information bits of the serving cell are taken as codebooks for feedback. In the case where the codebook includes the HARQ-ACK information bits of multiple serving cells, a method for determining HARQ-ACK information bits of each serving cell is identical to that for determining HARQ-ACK information bits of one serving cell. However, in specific determination, such other parameters as PDSCH TDRA configurations to which each serving cell corresponds may be identical or different. For example, the above parameters may possibly be configured separately for each serving cell; however, the embodiments are not limited thereto. The HARQ-ACK information bits to which each serving cell corresponds may be arranged in an ascending order of indices of the serving cells, so as to generate codebooks for feedback.

It should be noted that the method may further include: the terminal equipment receives, higher-layer signaling transmitted by the network device, the higher-layer signaling (such as a parameter repetitionScheme in RRC signaling) being used to configure a repetition transmission scheme of identical TBs in a multi-TRP scenario (such as being configured as 'tdmSchemeA'). That is, only in a case where the terminal equipment is configured with 'tdmSchemeA' and/or multi-PDSCH scheduling, the implementation in 1001 is used in determining the candidate PDSCH reception occasion set; however, the embodiments of this disclosure is not limited thereto.

It can be seen from the above embodiments that HARQ feedback may be supported in cases of the multi-TRP repetition scheme and/or multi-PDSCH scheduling, thereby reducing a PDCCH monitoring burden of the UE and lowering power loss and UE complexity.

It should be noted that FIGs. 4, 9 and 10 only schematically illustrates the embodiments of this disclosure; however, this disclosure is not limited thereto. For example, an order of execution of the steps may be appropriately adjusted, and furthermore, some other steps may be added, or some steps therein may be reduced. And appropriate variants may be made by those skilled in the art according to the above contents, without being limited to what is contained in FIGs. 4, 9 and 10.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

Embodiments of Fourth aspect

The embodiments of this disclosure provide an information reception apparatus. The apparatus may be, for example, a terminal equipment, or one or some components or assemblies configured in the terminal equipment. Contents in the embodiments identical to those in the embodiments of the first aspect shall not be described herein any further.

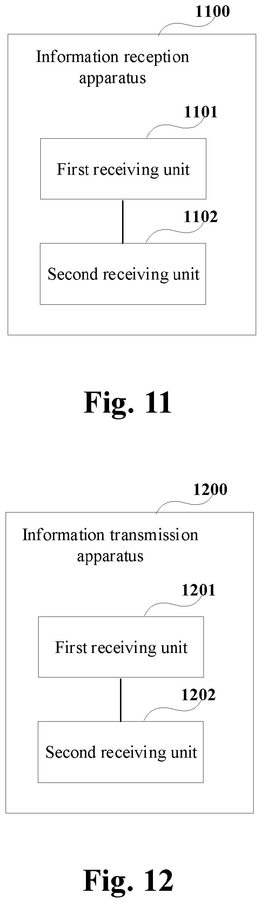

FIG. 11 is a schematic diagram of the information reception apparatus of the embodiments of this disclosure. As shown in FIG. 11, an information reception apparatus 1100 includes:

a first receiving unit 1101 configured to receive downlink control information DCI scheduling PDSCH(s) transmitted by a network device, the downlink control information indicating a first number of TCI states; wherein the first number being an integer greater than 1, and one or more than one row in a TDRA table to which the downlink control information corresponds include more than one SLIV; and
a second receiving unit 1102 configured to receive one or more than one PDSCH in the PDSCH(s) scheduled by the downlink control information.

In some embodiments, the terminal equipment may further include (not shown): a third determining unit configured to determine a first number of PDSCH transmission occasions for PDSCHs in the PDSCHs scheduled by the downlink control information. The PDSCHs in the PDSCHs scheduled by the downlink control information correspond to the first number of PDSCH transmission occasions. The second receiving unit receives or does not receive the PDSCHs at the PDSCH transmission occasions. The first number of PDSCH transmission occasions and how to determine whether to receive or not to receive the PDSCHs at the PDSCH transmission occasions shall be exemplified below.
In some embodiments, the DCI schedules more than one PDSCH.
In some embodiments, when there exists a PDSCH transmission occasion of a PDSCH that collides with a semi-statically configured uplink symbol, the second receiving unit does not receive the PDSCH; and when there exists no PDSCH transmission occasion of a PDSCH that collides with a semi-statically configured uplink symbol, the second receiving unit receives the PDSCH.
In some embodiments, when there exists a PDSCH transmission occasion of a PDSCH that does not collide with a semi-statically configured uplink symbol, the second receiving unit receives the PDSCH; and when there exists no PDSCH transmission occasion of a PDSCH that does not collide with a semi-statically configured uplink symbol, the second receiving unit does not receive the PDSCH.
In some embodiments, the second receiving unit receives the PDSCH at a PDSCH transmission occasion that does not collide with a semi-statically configured uplink symbol.
In some embodiments, when a first one of PDSCH transmission occasions of a PDSCH does not collide with a semi-statically configured uplink symbol, the second receiving unit receives the PDSCH; and when a first one of PDSCH transmission occasions of a PDSCH collides with a semi-statically configured uplink symbol, the second receiving unit does not receive the PDSCH.
In some embodiments, the terminal equipment may further include (not shown): a fifth determining unit configured to determine an HARQ process identifier of the PDSCH scheduled by the DCI. The apparatus may not include the second receiving unit, and may include the first receiving unit and the fifth determining unit.
In some embodiments, when there exists a PDSCH transmission occasion of a PDSCH that collides with a semi-statically configured uplink symbol, the PDSCH does not have a corresponding HARQ process ID; and when there exists no PDSCH transmission occasion of a PDSCH that collides with a semi-statically configured uplink symbol, the PDSCH has a corresponding HARQ process ID.
In some embodiments, when there exists a PDSCH transmission occasion of a PDSCH that does not collide with a semi-statically configured uplink symbol, the PDSCH has a corresponding HARQ process ID; and when there exists no PDSCH transmission occasion of a PDSCH that does not collide with a semi-statically configured uplink symbol, the PDSCH does not have a corresponding HARQ process ID.
In some embodiments, when a first one of PDSCH transmission occasions of a PDSCH does not collide with a semi-statically configured uplink symbol, the PDSCH has a corresponding HARQ process ID; and when a first one of PDSCH transmission occasions of a PDSCH collides with a semi-statically configured uplink symbol, the PDSCH does not have a corresponding HARQ process ID.
In some embodiments, the DCI schedules one PDSCH.
In some embodiments, the second receiving unit receives the PDSCH on PDSCH transmission occasions of the first number, or, the second receiving unit receives the PDSCH on one or more of PDSCH transmission occasions of the first number according to whether it collides with a semi-statically configured uplink symbol.
In some embodiments, the terminal equipment may further include (not shown): a fourth determining unit configured to determine PDSCH transmission occasions of the first number for valid PDSCHs in the PDSCH(s) scheduled by the downlink control information. Each valid PDSCH in the PDSCH(s) scheduled by the downlink control information corresponds to the PDSCH transmission occasions of the first number. The second determining unit does not determine the PDSCH transmission occasions of the first number for invalid PDSCHs in the PDSCHs scheduled by the downlink control information. The second receiving unit receives or does not receive the PDSCHs at the PDSCH transmission occasions.

In some embodiments, the DCI schedules one or more than one PDSCH, the one or more than one PDSCH including only one valid PDSCH, and the valid PDSCH corresponding to the PDSCH transmission occasions of the first number.

In some embodiments, the valid PDSCH is a PDSCH corresponding to a time domain resource configuration which does not collide with semi-statically configured uplink symbols.

In some embodiments, the second receiving unit receives a valid PDSCH at the PDSCH transmission occasions of the first number, or, the second receiving unit receives a valid PDSCH at one or more of the PDSCH transmission occasions of the first number according to whether it collides with the semi-statically configured uplink symbols.

In some embodiments, the first number of PDSCH transmission occasions include a first PDSCH transmission occasion and a second PDSCH transmission occasion, and the apparatus further includes (not shown):

a first determining unit configured to determine a candidate PDSCH reception occasion set according to a symbol to which the first PDSCH transmission occasion corresponds and/or a symbol to which the second PDSCH transmission occasion corresponds, and/or according to a first allocation table, the first allocation table being related to an offset value between the first PDSCH transmission occasion and the second PDSCH transmission occasion; and

a first processing unit configured to generate and transmit an HARQ-ACK codebook, the codebook including HARQ-ACK information to which the candidate PDSCH reception occasion set corresponds.

In some embodiments, reference may be made to 401-402 in the embodiments of the first aspect for implementations of the first receiving unit 1101 and the second receiving unit 1102, with repeated parts being not going to be described herein any further.

Embodiments of Fifth aspect

The embodiments of this disclosure provide an information transmission apparatus. The apparatus may be, for example, a network device, or one or some components or assemblies configured in the network device. Contents in these embodiments identical to those in the embodiments of the second aspect shall not be described herein any further.

FIG. 12 is a schematic diagram of the information transmission apparatus of the embodiments of this disclosure. As shown in FIG. 12, an information transmission apparatus 1200 includes:

a first transmitting unit 1201 configured to transmit downlink control information for scheduling PDSCH(s) to a terminal equipment, the downlink control information indicating a first number of TCI states; wherein the first number being an integer greater than 1, and one or more than one row in a TDRA table to which the downlink control information corresponds include more than one SLIV; and

a second transmitting unit 1202 configured to transmit one or more than one PDSCH in the PDSCH(s) scheduled by the downlink control information.

In some embodiments, reference may be made to 901-902 in the embodiments of the second aspect for implementations of the first transmitting unit 1201 and the second transmitting unit 1202, with repeated parts being not going to be described herein any further.

It can be seen from the above embodiments that in a case where scheduling more than one PDSCH by single DCI is supported, the multi-TRP repetition scheme is also supported. Hence, not only the number of times of monitoring PDCCHs of the terminal equipment may be reduced to lower complexity and power consumption of the terminal equipment in monitoring PDCCHs, but also overhead of resources for transmitting downlink control signaling (DCI) may be lowered to improve data throughput.

Embodiments of Sixth aspect

The embodiments of this disclosure provide an information feedback apparatus. The apparatus may be, for example, a terminal equipment, or one or some components or assemblies configured in the terminal equipment. Contents in these embodiments identical to those in the embodiments of the third aspect shall not be described herein any further.

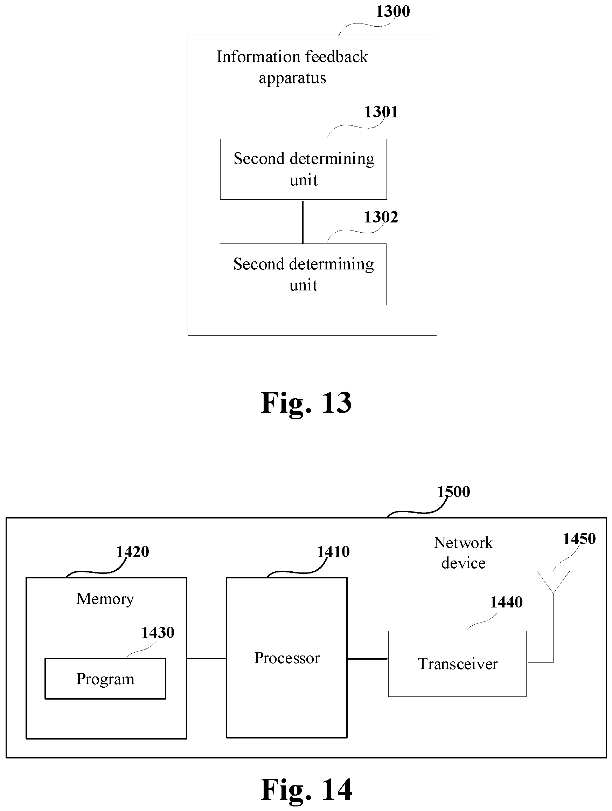

FIG. 13 is a schematic diagram of the information feedback apparatus of the embodiments of this disclosure. As shown in FIG. 13, an information feedback apparatus 1300 includes:

a second determining unit 1301 configured to determine a candidate PDSCH reception occasion set according to a symbol to which a first PDSCH transmission occasion corresponds and/or a symbol to which a second PDSCH transmission occasion corresponds, and/or according to a first allocation table, the first allocation table being related to an offset value between a first PDSCH transmission occasion and a second PDSCH transmission occasion; and a second processing unit 1302 configured to generate and transmit an HARQ-ACK codebook, the codebook including HARQ-ACK information to which the candidate PDSCH reception occasion set corresponds.

In some embodiments, the apparatus may further include (not shown):
a third receiving unit configured to receive downlink control information transmitted by a network device, the downlink control information indicating a first number of TCI states, the first PDSCH transmission occasion and the second PDSCH transmission occasion corresponding to one PDSCH, and the first PDSCH transmission occasion and the second PDSCH transmission occasion respectively corresponding to different TCI states.

In some embodiments, the offset value is a time domain offset value between a last symbol of the first PDSCH transmission occasion and a first symbol of the second PDSCH transmission occasion.

In some embodiments, reference may be made to 1001-1002 in the embodiments of the third aspect for implementations of the second determining unit 1301 and the second processing unit 1302, with repeated parts being not going to be described herein any further.

It can be seen from the above embodiments that HARQ-ACK information feedback for scheduling multiple PDSCHs by single DCI is supported, and a method for scheduling multiple PDSCHs by single DCI is also supported, thereby reducing a PDCCH monitoring burden of the UE and lowering power loss and UE complexity.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

It should be noted that the components or modules related to this disclosure are only described above. However, this disclosure is not limited thereto, and the apparatuses in FIGs. 11-13 may further include other components or modules, and reference may be made to related techniques for particulars of these components or modules.

Furthermore, for the sake of simplicity, connection relationships between the components or modules or signal profiles thereof are only illustrated in FIGs. 11-13. However, it should be understood by those skilled in the art that such related techniques as bus connection, etc., may be adopted. And the above components or modules may be implemented by hardware, such as a processor, a memory, a transmitter, and a receiver, etc., which are not limited in the embodiments of this disclosure.

The embodiments of the fourth and sixth aspects may be implemented separately or in a combined manner, and the embodiments of this disclosure is not limited thereto.

Embodiments of Seventh aspect

The embodiments of this disclosure provide a communication system, and reference may be made to FIG. 3, with contents identical to those in the embodiments of the first to the sixth aspects being not going to be described herein any further.

In some embodiments, the communication system 100 may at least include: a terminal equipment 102 and a network device 101.

In some embodiments, reference may be made to the terminal equipment 1100 for implementation of the terminal equipment 102, and reference may be made to the network device 100 for implementation of the network device, which shall not be described herein any further.

The embodiments of this disclosure further provide a network device, which may be, for example, a base station. However, this disclosure is not limited thereto, and it may also be another network device.

FIG. 14 is a schematic diagram of a structure of the network device of the embodiments of this disclosure. As shown in FIG. 14, a network device 1400 may include a processor 1410 (such as a central processing unit (CPU)) and a memory 1420, the memory 1420 being coupled to the processor 1410. The memory 1420 may store various data, and furthermore, it may store a program 1430 for information processing, and execute the program 1430 under control of the processor 1410.

For example, the processor 1410 may be configured to execute a program to carry out the information transmission method described in the embodiments of second aspect.

Furthermore, as shown in FIG. 14, the network device 1400 may include a transceiver 1440, and an antenna 1450, etc. Functions of the above components are similar to those in the related art, and shall not be described herein any further. It should be noted that the network device 1400 does not necessarily include all the parts shown in FIG. 14, and furthermore, the network device 1400 may include parts not shown in FIG. 14, and the related art may be referred to.

The embodiments of this disclosure further provides a terminal equipment; however, this disclosure is not limited thereto, and it may also be another equipment.

FIG. 15 is a schematic diagram of the terminal equipment of the embodiments of this disclosure. As shown in FIG. 15, a terminal equipment 1500 may include a processor 1510 and a memory 1520, the memory 1520 storing data and a program and being coupled to the processor 1510. It should be noted that this figure is illustrative only, and other types of structures may also be used, so as to supplement or replace this structure and achieve a telecommunications function or other functions.

For example, the processor 1510 may be configured to execute a program to carry out the information reception method as described in the embodiments of the first aspect or the information feedback method as described in the embodiments of the third aspect.

As shown in FIG. 15, the terminal equipment 1500 may further include a communication module 1530, an input unit 1540, a display 1550, and a power supply 1560; wherein functions of the above components are similar to those in the related art, which shall not be described herein any further. It should be noted that the terminal equipment 1500 does not necessarily include all the parts shown in FIG. 15, and the above components are not necessary. Furthermore, the terminal equipment 1500 may include parts not shown in FIG. 15, and the related art may be referred to.

Embodiments of this disclosure provide a computer readable program, which, when executed in a terminal equipment, cause the terminal equipment to carry out the information reception method as described in the embodiments of the first aspect.

Embodiments of this disclosure provide a computer readable medium, including a computer readable program, which will cause a terminal equipment to carry out the information reception method as described in the embodiments of the first aspect.

Embodiments of this disclosure provide a computer readable program, which, when executed in a network device, cause the network device to carry out the information transmission method as described in the embodiments of the second aspect.

Embodiments of this disclosure provide a computer readable medium, including a computer readable program, which will cause a network device to carry out the information transmission method as described in the embodiments of the second aspect.

Embodiments of this disclosure provide a computer readable program, which, when executed in a terminal equipment, cause the terminal equipment to carry out the information feedback method as described in the embodiments of the third aspect.

Embodiments of this disclosure provide a computer readable medium, including a computer readable program , which cause a terminal equipment to carry out the information feedback method as described in the embodiments of the third aspect.

The above apparatuses and methods of this disclosure may be implemented by hardware, or by hardware in combination with software. This disclosure relates to such a computer-readable program that when the program is executed by a logic device, the logic device is enabled to carry out the apparatus or components as described above, or to carry out the methods or steps as described above. This disclosure also relates to a storage medium for storing the above program, such as a hard disk, a floppy disk, a CD, a DVD, and a flash memory, etc.

The methods/apparatuses described with reference to the embodiments of this disclosure may be directly embodied as hardware, software modules executed by a processor, or a combination thereof. For example, one or more functional block diagrams and/or one or more combinations of the functional block diagrams shown in the drawings may either correspond to software modules of procedures of a computer program, or correspond to hardware modules. Such software modules may respectively correspond to the steps shown in the drawings. And the hardware module, for example, may be carried out by firming the soft modules by using a field programmable gate array (FPGA).

The soft modules may be located in an RAM, a flash memory, an ROM, an EPROM, an EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile terminal, and may also be stored in a memory card of a pluggable mobile terminal. For example, if equipment (such as a mobile terminal) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in the drawings may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in the drawings may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of the present disclosure. Various variants and modifications may be made by those skilled in the art according to the spirits and principle of the present disclosure, and such variants and modifications fall within the scope of the present disclosure.

As to implementations containing the above embodiments, following supplements are further disclosed.

1. An information reception method, characterized in that the method includes:

receiving, by a terminal equipment, downlink control information DCI scheduling PDSCH(s) transmitted by a network device, the downlink control information indicating a first number of TCI states; wherein the first number being an integer greater than 1, and one or more than one row in a TDRA table to which the downlink control information corresponds include more than one SLIV; and
receiving one or more than one PDSCH by the terminal equipment in the PDSCHs scheduled by the downlink control information.

2. The method according to supplement 1, wherein,
the terminal equipment determines the first number of PDSCH transmission occasions for each PDSCH in the PDSCH(s) scheduled by the downlink control information.

3. The method according to supplement 1 or 2, wherein each PDSCH in the PDSCH(s) scheduled by the downlink control information corresponds to PDSCH transmission occasions of the first number.

4. The method according to supplement 2 or 3, wherein the terminal equipment receives or does not receive the PDSCHs at the PDSCH transmission occasions.

5. The method according to any one of supplements 1-4, wherein,
the DCI schedules more than one PDSCH.

6. The method according to supplement 5, wherein,

when there exists a PDSCH transmission occasion of a PDSCH that collides with a semi-statically configured uplink symbol, the terminal equipment does not receive the PDSCH;
and when there exists no PDSCH transmission occasion of a PDSCH that collides with a semi-statically configured uplink symbol, the terminal equipment receives the PDSCH.

7. The method according to supplement 5, wherein,

when there exists a PDSCH transmission occasion of a PDSCH that does not collide with a semi-statically configured uplink symbol, the terminal equipment receives the PDSCH;
and when there exists no PDSCH transmission occasion of a PDSCH that does not collide with a semi-statically configured uplink symbol, the terminal equipment does not receive the PDSCH.

8. The method according to supplement 5, wherein,
the terminal equipment receives the PDSCH at a PDSCH transmission occasion that does not collide with a semi-statically configured uplink symbol.

9. The method according to supplement 5, wherein,

when a first one of PDSCH transmission occasions of a PDSCH does not collide with a semi-statically configured uplink symbol, the terminal equipment receives the PDSCH;
and when a first one of PDSCH transmission occasions of a PDSCH collides with a semi-statically configured uplink symbol, the terminal equipment does not receive the PDSCH.

10. The method according to supplement 6, wherein when there exists a PDSCH transmission occasion of a PDSCH that collides with a semi-statically configured uplink symbol, the PDSCH does not have a corresponding HARQ process ID;
and when there exists no PDSCH transmission occasion of a PDSCH that collides with a semi-statically configured uplink symbol, the PDSCH has a corresponding HARQ process ID.

11. The method according to any one of supplements 6-9, wherein,

when there exists a PDSCH transmission occasion of a PDSCH that does not collide with a semi-statically configured uplink symbol, the PDSCH has a corresponding HARQ process ID;

and when there exists no PDSCH transmission occasion of a PDSCH that does not collide with a semi-statically configured uplink symbol, the PDSCH does not have a corresponding HARQ process ID.

12. The method according to supplement 6 or 9, wherein,

when a first one of PDSCH transmission occasions of a PDSCH does not collide with a semi-statically configured uplink symbol, the PDSCH has a corresponding HARQ process ID;

and when a first one of PDSCH transmission occasions of a PDSCH collides with a semi-statically configured uplink symbol, the PDSCH does not have a corresponding HARQ process ID.

13. The method according to any one of supplements 2-4, wherein,
the DCI schedules one PDSCH.

14. The method according to supplement 13, wherein,

the terminal equipment receives a PDSCH on PDSCH transmission occasions of the first number, or,
the terminal equipment receives the PDSCH on one or more of PDSCH transmission occasions of the first number according to whether it collides with a semi-statically configured uplink symbol.

15. The method according to supplement 1, wherein,
the terminal equipment determines PDSCH transmission occasions of the first number for valid PDSCHs in the PDSCH(s) scheduled by the downlink control information.

16. The method according to supplement 1 or 15, wherein each valid PDSCH in the PDSCH(s) scheduled by the downlink control information corresponds to the PDSCH transmission occasions of the first number.

17. The method according to supplement 15 or 16, wherein the terminal equipment receives or does not receive the PDSCHs at the PDSCH transmission occasions.

18. The method according to supplement 17, wherein the method further includes: not determining the PDSCH transmission occasions of the first number for invalid PDSCHs in the PDSCH(s) scheduled by the downlink control information by the terminal equipment.

19. The method according to any one of supplements 1 and 15-18, wherein,
the DCI schedules one or more than one PDSCH, the one or more than one PDSCH including only one valid PDSCH, and the valid PDSCH corresponding to the PDSCH transmission occasions of the first number.

20. The method according to any one of supplements 15-19, wherein the valid PDSCH is a PDSCH corresponding to a time domain resource configuration which does not collide with semi-statically configured uplink symbols.

21. The method according to any one of supplements 15-20, wherein,

the terminal equipment receives the valid PDSCH at the first number of PDSCH transmission occasions, or
the terminal equipment receives the valid PDSCH at one or more of the first number of PDSCH transmission occasions according to whether it collides with the semi-statically configured uplink symbol.

22. The method according to any one of supplements 1-21, wherein the first number of PDSCH transmission occasions include a first PDSCH transmission occasion and a second PDSCH transmission occasion, and the method includes:

determining a candidate PDSCH reception occasion set by the terminal equipment according to a symbol to which the first PDSCH transmission occasion corresponds and/or a symbol to which the second PDSCH transmission occasion corresponds, and/or according to a first allocation table, the first allocation table being related to an offset value between a first PDSCH transmission occasion and a second PDSCH transmission occasion; and
generating and transmitting an HARQ-ACK codebook by the terminal equipment, the codebook including HARQ-ACK information to which the candidate PDSCH reception occasion set corresponds.

23. An information transmission method, characterized in that the method includes:

transmitting downlink control information for scheduling PDSCH(s) by a network device to a terminal equipment, the downlink control information indicating a first number of TCI states, wherein the first number being an integer greater than 1, and one or more than one row in a TDRA table to which the downlink control information corresponds include more than one SLIV; and

transmitting one or more than one PDSCH in the PDSCH(s) scheduled by the downlink control information by the network device.

24. An information feedback method, characterized in that the method includes:

determining a candidate PDSCH reception occasion set by a terminal equipment according to a symbol to which a first PDSCH transmission occasion corresponds and/or a symbol to which a second PDSCH transmission occasion corresponds, and/or according to a first allocation table, the first allocation table being related to an offset value between a first PDSCH transmission occasion and a second PDSCH transmission occasion; and

generating and transmitting an HARQ-ACK codebook by the terminal equipment, the codebook including HARQ-ACK information to which the candidate PDSCH reception occasion set corresponds.

25. The method according to claim 24, wherein the method further includes:

receiving, by the terminal equipment, downlink control information transmitted by a network device, the downlink control information indicating a first number of TCI states, the first PDSCH transmission occasion and the second PDSCH transmission occasion corresponding to one PDSCH, and the first PDSCH transmission occasion and the second PDSCH transmission occasion respectively corresponding to different TCI states.

26. The apparatus according to claim 24 or 25, wherein the offset value is a time domain offset value between a last symbol of the first PDSCH transmission occasion and a first symbol of the second PDSCH transmission occasion.

27. An information reception method, characterized in that the method includes:

receiving, by a terminal equipment, downlink control information scheduling PDSCH(s) transmitted by a network device, the downlink control information indicating a first number of TCI states; wherein the first number being an integer greater than 1, and one or more than one row in a TDRA table to which the downlink control information corresponds include more than one SLIV; and

determining HARQ process IDs corresponding to the scheduled PDSCHs by the terminal equipment.

28. The method according to supplement 27, wherein,

the terminal equipment determines the first number of PDSCH transmission occasions for each PDSCH in the PDSCH(s) scheduled by the downlink control information.

29. The method according to supplement 27 or 28, wherein each PDSCH in the PDSCH(s) scheduled by the downlink control information corresponds to PDSCH transmission occasions of the first number.

30. The method according to any one of supplements 27-29, wherein,

the DCI schedules more than one PDSCH.

31. The method according to any one of supplements 27-30, wherein when there exists a PDSCH transmission occasion of a PDSCH that collides with a semi-statically configured uplink symbol, the PDSCH does not have a corresponding HARQ process ID;

and when there exists no PDSCH transmission occasion of a PDSCH that collides with a semi-statically configured uplink symbol, the PDSCH has a corresponding HARQ process ID.

32. The method according to any one of supplements 27-30, wherein,

when there exists a PDSCH transmission occasion of a PDSCH that does not collide with a semi-statically configured uplink symbol, the PDSCH has a corresponding HARQ process ID;

and when there exists no PDSCH transmission occasion of a PDSCH that does not collide with a semi-statically configured uplink symbol, the PDSCH does not have a corresponding HARQ process ID.

33. The method according to any one of supplements 27-30, wherein,

when a first one of PDSCH transmission occasions of a PDSCH does not collide with a semi-statically configured uplink symbol, the PDSCH has a corresponding HARQ process ID;

and when a first one of PDSCH transmission occasions of a PDSCH collides with a semi-statically configured uplink symbol, the PDSCH does not have a corresponding HARQ process ID.

34. A network device, including a memory and a processor, the memory storing a computer program, and the processor being configured to execute the computer program to carry out the information transmission method as described in supplement 23.

35. A terminal equipment, including a memory and a processor, the memory storing a computer program, and the processor being configured to execute the computer program to carry out the method as described in any one of supplements 1-22 and 24-33.

36. A communication system, including:

the terminal equipment as described in supplement 35, and/or the network device as described in supplement 34.

37. An information reception apparatus, characterized in that the apparatus is applicable to a terminal equipment, and the apparatus includes:

a first receiving unit configured to receive downlink control information DCI scheduling PDSCH(s) transmitted by a network device, the downlink control information indicating a first number of TCI states, wherein the first number being an integer greater than 1, and one or more than one row in a TDRA table to which the downlink control information corresponds include more than one SLIV; and
a fifth determining unit configured to determine an HARQ process identifier to which a scheduled PDSCH corresponds.

38. The apparatus according to supplement 37, wherein,

the terminal equipment determines the first number of PDSCH transmission occasions for each PDSCH in the PDSCH(s) scheduled by the downlink control information.

39. The apparatus according to supplement 37 or 38, wherein each PDSCH in the PDSCH(s) scheduled by the downlink control information corresponds to PDSCH transmission occasions of the first number.

40. The apparatus according to any one of supplements 37-39, wherein,

the DCI schedules more than one PDSCH.

41. The apparatus according to any one of supplements 37-40, wherein when there exists a PDSCH transmission occasion of a PDSCH that collides with a semi-statically configured uplink symbol, the PDSCH does not have a corresponding HARQ process ID;

and when there exists no PDSCH transmission occasion of a PDSCH that collides with a semi-statically configured uplink symbol, the PDSCH has a corresponding HARQ process ID.

42. The apparatus according to any one of supplements 37-40, wherein,

when there exists a PDSCH transmission occasion of a PDSCH that does not collide with a semi-statically configured uplink symbol, the PDSCH has a corresponding HARQ process ID;
and when there exists no PDSCH transmission occasion of a PDSCH that does not collide with a semi-statically configured uplink symbol, the PDSCH does not have a corresponding HARQ process ID.

43. The apparatus according to any one of supplements 37-40, wherein,

when a first one of PDSCH transmission occasions of a PDSCH does not collide with a semi-statically configured uplink symbol, the PDSCH has a corresponding HARQ process ID;
and when a first one of PDSCH transmission occasions of a PDSCH collides with a semi-statically configured uplink symbol, the PDSCH does not have a corresponding HARQ process ID.

**Claims**

1.  An information reception apparatus, applicable to a terminal equipment, **characterized in that** the apparatus comprising:

a first receiving unit configured to receive downlink control information DCI scheduling PDSCH(s) transmitted by a network device, the downlink control information indicating a first number of TCI states, wherein the first number being an integer greater than 1, and one or more than one row in a TDRA table to which the downlink control information corresponds comprise more than one SLIV; and
a second receiving unit configured to receive one or more than one PDSCH in the PDSCH(s) scheduled by the downlink control information.

2.  The apparatus according to claim 1, wherein each PDSCH in the PDSCH(s) scheduled by the downlink control information corresponds to PDSCH transmission occasions of the first number.

3.  The apparatus according to claim 2, wherein,
the DCI schedules more than one PDSCH.

4. The apparatus according to claim 3, wherein,

   when there exists a PDSCH transmission occasion of a PDSCH that collides with a semi-statically configured uplink symbol, the second receiving unit does not receive the PDSCH; and
   when there exists no PDSCH transmission occasion of a PDSCH that collides with a semi-statically configured uplink symbol, the second receiving unit receives the PDSCH.

5. The apparatus according to claim 3, wherein,

   when there exists a PDSCH transmission occasion of a PDSCH that does not collide with a semi-statically configured uplink symbol, the second receiving unit receives the PDSCH; and
   when there exists no PDSCH transmission occasion of a PDSCH that does not collide with a semi-statically configured uplink symbol, the second receiving unit does not receive the PDSCH.

6. The apparatus according to claim 3, wherein,
   the second receiving unit receives a PDSCH at a PDSCH transmission occasion that does not collide with a semi-statically configured uplink symbol.

7. The apparatus according to claim 3, wherein,

   when a first one of PDSCH transmission occasions of a PDSCH does not collide with a semi-statically configured uplink symbol, the second receiving unit receives the PDSCH;
   and when a first one of PDSCH transmission occasions of a PDSCH collides with a semi-statically configured uplink symbol, the second receiving unit does not receive the PDSCH.

8. The apparatus according to claim 4, wherein when there exists a PDSCH transmission occasion of a PDSCH that collides with a semi-statically configured uplink symbol, the PDSCH does not have a corresponding HARQ process ID; and
   when there exists no PDSCH transmission occasion of a PDSCH that collides with a semi-statically configured uplink symbol, the PDSCH has a corresponding HARQ process ID.

9. The apparatus according to claim 4, wherein,

   when there exists a PDSCH transmission occasion of a PDSCH that does not collide with a semi-statically configured uplink symbol, the PDSCH has a corresponding HARQ process ID; and
   when there exists no PDSCH transmission occasion of a PDSCH that does not collide with a semi-statically configured uplink symbol, the PDSCH does not have a corresponding HARQ process ID.

10. The apparatus according to claim 4, wherein,

    when a first one of PDSCH transmission occasions of a PDSCH does not collide with a semi-statically configured uplink symbol, the PDSCH has a corresponding HARQ process ID;
    and when a first one of PDSCH transmission occasions of a PDSCH collides with a semi-statically configured uplink symbol, the PDSCH does not have a corresponding HARQ process ID.

11. The apparatus according to claim 2, wherein,
    the DCI schedules one PDSCH.

12. The apparatus according to claim 11, wherein,

    the second receiving unit receives the PDSCH on PDSCH transmission occasions of the first number, or,
    the second receiving unit receives the PDSCH on one or more of PDSCH transmission occasions of the first number according to whether it collides with a semi-statically configured uplink symbol.

13. The apparatus according to claim 1, wherein the apparatus further comprising:
    a fourth determining unit configured to determine PDSCH transmission occasions of the first number for valid PDSCHs in the PDSCH(s) scheduled by the downlink control information.

14. The apparatus according to claim 13, wherein each valid PDSCH in the PDSCH(s) scheduled by the downlink control information corresponds to the PDSCH transmission occasions of the first number.

15. The apparatus according to claim 13, wherein,
the DCI schedules one or more than one PDSCH, the one or more than one PDSCH comprising only one valid PDSCH, and the valid PDSCH corresponding to the PDSCH transmission occasions of the first number.

16. The apparatus according to claim 13, wherein the valid PDSCH is a PDSCH corresponding to a time domain resource configuration which does not collide with semi-statically configured uplink symbols.

17. An information transmission apparatus, applicable to a network device, **characterized in that** the apparatus comprising:

a first transmitting unit configured to transmit downlink control information for scheduling PDSCH(s) to a terminal equipment, the downlink control information indicating a first number of TCI states; wherein the first number being an integer greater than 1, and one or more than one row in a TDRA table to which the downlink control information corresponds comprise more than one SLIV; and
a second transmitting unit configured to transmit one or more than one PDSCH in the PDSCH(s) scheduled by the downlink control information.

18. An information feedback apparatus, applicable to a terminal equipment, **characterized in that** the apparatus comprising:

a second determining unit configured to determine a candidate PDSCH reception occasion set according to a symbol to which a first PDSCH transmission occasion corresponds and/or a symbol to which a second PDSCH transmission occasion corresponds, and/or according to a first allocation table, the first allocation table being related to an offset value between a first PDSCH transmission occasion and a second PDSCH transmission occasion; and
a second processing unit configured to generate and transmit an HARQ-ACK codebook, the codebook comprising HARQ-ACK information to which the candidate PDSCH reception occasion set corresponds.

19. The apparatus according to claim 18, wherein the apparatus further comprises:
a third receiving unit configured to receive downlink control information transmitted by a network device, the downlink control information indicating a first number of TCI states, the first PDSCH transmission occasion and the second PDSCH transmission occasion corresponding to one PDSCH, and the first PDSCH transmission occasion and the second PDSCH transmission occasion respectively corresponding to different TCI states.

20. The apparatus according to claim 18, wherein the offset value is a time domain offset value between a last symbol of the first PDSCH transmission occasion and a first symbol of the second PDSCH transmission occasion.

TB0     TB0

TRP0    TRP1

## Fig. 1

Identical TBs

P D C C H

1$^{st}$ PDSCH transmission occasion (TRP 1)

2$^{nd}$ PDSCH transmission occasion (TRP 2)

0 1 2 3 4 5 6 7 8 9 10 11 12 13 0 1 2 3 4 5 6 7 8 9 10 11 12 13 0 1 2 3 4 5 6 7 8 9 10 11 12 13 0 1 2 3 4 5 6 7 8 9 10 11 12 13 0 1 2 3 4 5 6 7 8 9 10 11 12 13 0 1 2 3 4 5 6 7 8 9 10 11 12 13

One slot

## Fig. 2

100

101

103

102

## Fig. 3

401

the terminal equipment receives, downlink control information DCI scheduling PDSCH(s) transmitted by a network device, the downlink control information indicating a first number of TCI states, wherein the first number being an integer greater than 1, and one or more than one row in a TDRA table to which the downlink control information corresponds comprise more than one SLIV

402

the terminal equipment Receives one or more than one PDSCH in the PDSCH(s) scheduled by the downlink control information

**Fig. 4**

**Fig. 5**

**Fig. 6A**

**Fig. 6B**

Fig. 7A

Fig. 7B

Fig. 8A

Fig. 8B

**901**

a network device Transmits DCI for scheduling PDSCH(s), the DCI indicating a first number of TCI states, wherein the first number being an integer greater than 1, and one or more than one row in a TDRA table to which the DCI corresponds include more than one SLIV

**902**

the network device Transmits, one or more than one PDSCH in the PDSCH(s) scheduled by the downlink control information

# Fig. 9

**1001**

the terminal equipment Determines a candidate PDSCH reception occasion set according to a symbol to which a first PDSCH transmission occasion corresponds and/or a symbol to which a second PDSCH transmission occasion corresponds, and/or according to a first allocation table, the first allocation table being related to an offset value between a first PDSCH transmission occasion and a second PDSCH transmission occasion

**1002**

the terminal equipment Generates and transmits an HARQ-ACK codebook by, the codebook including HARQ-ACK information to which the candidate PDSCH reception occasion set corresponds

# Fig. 10

**1100**

Information reception
apparatus

**1101**

First receiving unit

**1102**

Second receiving unit

# Fig. 11

**1200**

Information transmission
apparatus

**1201**

First receiving unit

**1202**

Second receiving unit

# Fig. 12

**1300**

Information feedback apparatus

**1301**

Second determining unit

**1302**

Second determining unit

# Fig. 13

**1500**

Network device

**1420**

Memory

**1430**

Program

**1410**

Processor

**1440**

Transceiver

**1450**

# Fig. 14

EP 4 478 803 A1

Fig. 15

Fig. 16A

32

| Slot n-5(DL) | Slot n-4 (DL) | Slot n-3 (DL) | Slot n-2 (UL) | Slot n-1 (DL/UL) | Slot n (UL) |

PDCCH

Scheduling row 1

SLIV0_0
(invalid)

SLIV0_1
(valid)

SLIV1_0
(valid)

SLIV1_1
(invalid)

SLIV1_2
(invalid)

K1=1

PUCCH

SLIV0_0
(valid)

SLIV0_1
(invalid)

SLIV1_0
(valid)

SLIV1_1
(valid)

SLIV1_2
(invalid)

K1'=4

K1'=3

K1=2

candidate PDSCH reception
Occasion 0 (HARQ-ACK
information bits = HARQ-ACK
information bits of the PDSCH
corresponding to SLIV1_0)

candidate PDSCH reception
Occasion 1 (HARQ-ACK
information bits = HARQ-ACK
information bits of the PDSCH
corresponding to SLIV1_1)

candidate PDSCH reception
Occasion 2 (not scheduling
PDSCH, HARQ-ACK information
is padded with NACK)

# Fig. 16B

## INTERNATIONAL SEARCH REPORT

| International application No. |
|---|
| **PCT/CN2022/075933** |

**A. CLASSIFICATION OF SUBJECT MATTER**

H04W 72/04(2009.01)i

According to International Patent Classification (IPC) or to both national classification and IPC

**B. FIELDS SEARCHED**

Minimum documentation searched (classification system followed by classification symbols)

H04L; H04W; H04B

Documentation searched other than minimum documentation to the extent that such documents are included in the fields searched

Electronic data base consulted during the international search (name of data base and, where practicable, search terms used)

CNABS; CNTXT; VEN; WOTXT; USTXT; EPTXT; 3GPP; CNKI: 多发送接收点, 多TRP, 下行控制信息, 多, 两个, 大于, 至少, TCI状态, 时域资源分配表, 物理下行共享信道, 符号, 混合自动重传请求, 反馈, 接收, 发送, 时机, 时间, 时隙, 偏移, 码本, M 1w TRP, multi 1w TRP, DCI, at least, more, over, TCI state?, TDRA, PDSCH, symbol, HARQ, ?ACK, transmit+, send+, receiv+, slot?, offset?, codebook

**C. DOCUMENTS CONSIDERED TO BE RELEVANT**

| Category* | Citation of document, with indication, where appropriate, of the relevant passages | Relevant to claim No. |
|---|---|---|
| X | CN 113853763 A (TELEFONAKTIEBOLAGET L M ERICSSON) 28 December 2021 (2021-12-28) description, paragraphs 50-53, 70-82 | 1-17 |
| X | WO 2021062818 A1 (HUAWEI TECHNOLOGIES CO., LTD.) 08 April 2021 (2021-04-08) description, pages 13-17, and figure 6 | 18, 20 |
| X | ERICSSON. "PDSCH-PUSCH Enhancements" *3GPP TSG-RAN WG1 Meeting #104bis-e R1-2102792*, 07 April 2021 (2021-04-07), sections 2.2.7-2.3 | 1-17 |
| Y | WO 2021062818 A1 (HUAWEI TECHNOLOGIES CO., LTD.) 08 April 2021 (2021-04-08) description, pages 13-17, and figure 6 | 19 |
| Y | CN 113853763 A (TELEFONAKTIEBOLAGET L M ERICSSON) 28 December 2021 (2021-12-28) description, paragraphs 50-53, 70-82 | 19 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **08 September 2022** | **21 September 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2022/075933** |

**C.    DOCUMENTS CONSIDERED TO BE RELEVANT**

| Category* | Citation of document, with indication, where appropriate, of the relevant passages | Relevant to claim No. |
| --- | --- | --- |
| A | WO 2021012662 A1 (CHINA ACAD OF INFORMATION AND COMMUNICATIONS) 28 January 2021 (2021-01-28)<br>entire document | 1-20 |
| A | CN 111800868 A (HUAWEI TECHNOLOGIES CO., LTD.) 20 October 2020 (2020-10-20)<br>entire document | 1-20 |

Form PCT/ISA/210 (second sheet) (January 2015)

<table>
<tr><td>**INTERNATIONAL SEARCH REPORT**</td><td>International application No.<br>**PCT/CN2022/075933**</td></tr>
</table>

**Box No. III      Observations where unity of invention is lacking (Continuation of item 3 of first sheet)**

This International Searching Authority found multiple inventions in this international application, as follows:

[1]    Group 1: claims 1-17 relate to an information receiving method or device, wherein a plurality of PDSCHs are scheduled on the basis of one DCI.

[2]    Group 2: claims 18-20 relate to an information feedback apparatus, which is based on HARQ feedback under multi-PDSCH scheduling.

[3]    The same or corresponding technical feature of the two groups of inventions is: being applied to a terminal device. However, the same or corresponding technical feature "being applied to a terminal device" is commonly known in the art. Therefore, the two groups of inventions do not have the same or corresponding special technical features underlying the contribution of the inventions over the prior art, do not have any technical relationship therebetween, do not fall within a single general inventive concept, and thus do not satisfy the requirement of unity of invention and do not comply with PCT Rule 13.1.

1. ☐  As all required additional search fees were timely paid by the applicant, this international search report covers all searchable claims.

2. ☑  As all searchable claims could be searched without effort justifying additional fees, this Authority did not invite payment of additional fees.

3. ☐  As only some of the required additional search fees were timely paid by the applicant, this international search report covers only those claims for which fees were paid, specifically claims Nos.:

4. ☐  No required additional search fees were timely paid by the applicant. Consequently, this international search report is restricted to the invention first mentioned in the claims; it is covered by claims Nos.:

**Remark on Protest**    ☐  The additional search fees were accompanied by the applicant's protest and, where applicable, the payment of a protest fee.

☐  The additional search fees were accompanied by the applicant's protest but the applicable protest fee was not paid within the time limit specified in the invitation.

☐  No protest accompanied the payment of additional search fees.

Form PCT/ISA/210 (continuation of first sheet) (January 2015)

**INTERNATIONAL SEARCH REPORT**
Information on patent family members

International application No.

**PCT/CN2022/075933**

| Patent document cited in search report | | | Publication date (day/month/year) | Patent family member(s) | | | Publication date (day/month/year) |
|---|---|---|---|---|---|---|---|
| CN | 113853763 | A | 28 December 2021 | US | 2022104237 | A1 | 31 March 2022 |
| | | | | EP | 3949227 | A1 | 09 February 2022 |
| | | | | BR | 112021019292 | A2 | 01 February 2022 |
| | | | | WO | 2020201995 | A1 | 08 October 2020 |
| | | | | KR | 20210134795 | A | 10 November 2021 |
| | | | | IN | 202147048763 | A | 05 November 2021 |
| | | | | US | 11357031 | B2 | 07 June 2022 |
| | | | | US | 11395319 | B2 | 19 July 2022 |
| WO | 2021062818 | A1 | 08 April 2021 | US | 2022224453 | A1 | 14 July 2022 |
| | | | | EP | 4030658 | A1 | 20 July 2022 |
| | | | | CN | 114424474 | A | 29 April 2022 |
| WO | 2021012662 | A1 | 28 January 2021 | CN | 112242883 | A | 19 January 2021 |
| | | | | CN | 112242883 | B | 22 April 2022 |
| CN | 111800868 | A | 20 October 2020 | WO | 2020200187 | A1 | 08 October 2020 |
| | | | | US | 2022030609 | A1 | 27 January 2022 |
| | | | | EP | 3952524 | A1 | 09 February 2022 |
| | | | | EP | 3952524 | A4 | 08 June 2022 |
| | | | | JP | 2022528110 | A | 08 June 2022 |
| | | | | IN | 202147046563 | A | 29 October 2021 |
| | | | | BR | 112021019762 | A2 | 21 December 2021 |
| | | | | VN | 84241 | A | 25 February 2022 |

Form PCT/ISA/210 (patent family annex) (January 2015)